# EUROPÄISCHE PATENTANMELDUNG

(11) **EP 4 830 978 A1**
(43) Veröffentlichungstag der Anmeldung: **28.10.2026**
(21) Anmeldenummer: 26171724.3
(22) Anmeldetag: 10.04.2026
(51) Int. Cl.: B60L 50/51, B60L 3/00, B60L 3/04, B60L 3/12, B60L 5/24, B60L 7/06, B60L 7/14, B60L 7/16, B60L 7/26, B60L 9/12, B60L 9/22, B60L 9/28, B60L 50/53, B60L 50/60, B60L 50/75, B60L 53/22, B60L 58/12, B60L 58/15, B60L 58/25, B60L 58/26, B60L 58/40, H02J 105/37

(54) **ELEKTRISCHES ANTRIEBSSYSTEM FÜR EIN SCHIENENFAHRZEUG**

(30) Priorität: 15.04.2025 DE 102025114775; 28.05.2025 DE 102025121105
(71) Anmelder: Siemens Mobility GmbH, 80997 München (DE)
(72) Erfinder: Förster, Karl Christian Till, 91058 Erlangen (DE); Renelt, Claudia, 91058 Erlangen (DE)
(74) Vertreter: Siemens Patent Attorneys

(57) **Zusammenfassung**

Ein erfindungsgemäßes elektrisches Antriebssystem (AS) für ein Schienenfahrzeug umfasst einen Stromrichter, welcher zumindest einen Gleichspannungszwischenkreis (ZK) und zumindest einen mit diesem verbundenen steuerbaren Wechselrichter (PWR) aufweist, eine Anzahl Antriebsmotoren (AM), welche mit dem Wechselrichter (PWR) verbunden sind, zumindest einen Energiespeicher (BAT) zur Speicherung elektrischer Energie, einen mit dem Gleichspannungszwischenkreis (ZK) und dem Energiespeicher (BAT) verbundenen steuerbaren bidirektionalen ersten Gleichspannungswandler (GSW), einen ersten Verbindungspfad (VZ1), über welchen der Energiespeicher (BAT) mit dem Wechselrichter (PWR) verbunden ist, und eine Steuereinrichtung (ST), welche ausgestaltet ist, während eines Betriebs des Antriebssystems (AS) den ersten Gleichspannungswandler (GSW) derart zu steuern, dass der Energiespeicher (BAT) aus dem Gleichspannungszwischenkreis (ZK) geladen wird und in den Gleichspannungszwischenkreis (ZK) entladen wird. Das Antriebssystem (AS) umfasst einen zweiten Verbindungspfad (VZ2), über welchen der Energiespeicher (BAT) mit dem Wechselrichter (PWR) verbunden ist, und welcher abschnittsweise parallel zu dem ersten Verbindungspfad (VZ1) geschaltet ist, zumindest eine in dem parallelen Abschnitt des zweiten Verbindungspfads (VZ2) angeordnete Diode (DIO) umfasst, um ein Speisen des Wechselrichters (PWR) mit in dem Energiespeicher (BAT) gespeicherter elektrischer Energie zu verhindern, und umfasst zumindest einen steuerbaren ersten Schalter (S1). Die Steuereinrichtung (ST) ausgestaltet ist, bei Anforderung einer Schnellbremsung (sba) während eines Antriebs- oder Bremsbetriebs des Antriebssystems (AS) den ersten Verbindungspfad (VZ1) mittels des zumindest einen ersten Schalters (S1).

## Beschreibung

Die Erfindung betrifft ein elektrisches Antriebssystem für ein Schienenfahrzeug, ein Schienenfahrzeug mit zumindest einem solchen Antriebssystem sowie ein Verfahren zum Steuern eines elektrischen Antriebssystems eines Schienenfahrzeugs.

Schienenfahrzeuge, insbesondere Triebzüge für die Personenbeförderung im Nah-, Regional- und Fernverkehr sowie Lokomotiven, werden vermehrt mit elektrischen Energiespeichern ausgestattet. Solche Energiespeicher dienen einer Speicherung von elektrischer Energie, welche von einem streckenseitigen Versorgungsnetz, insbesondere einer stromführenden Oberleitung, dritten Schiene oder Ladestation, bereitgestellt wird. Die in diesen Energiespeichern gespeicherte Energie dient einer Versorgung des Antriebssystems, von Hilfsbetrieben sowie von Komfortverbrauchern des Schienenfahrzeugs bei dessen Betrieb auf nicht- oder nur teilelektrifizierten Strecken.

Neben der Speicherung von einem fahrzeugexternen Versorgungsnetz zugeführter elektrischer Energie dienen die Energiespeicher vorzugsweise ebenfalls dazu, bei einer Bremsung von der elektrodynamischen Bremse des Schienenfahrzeugs generatorisch erzeugte elektrische Energie aufzunehmen. Die elektrodynamische Bremse wirkt in diesem Fall entsprechend einer regenerativen Bremse.

Die Nutzung der regenerativen Bremse zur Einspeisung erzeugter elektrischer Energie in Energiespeicher des Schienenfahrzeugs ist derzeit auf die Betriebsbremsung beschränkt. Bei einer Schnellbremsung, welche die Gewährleistung eines bestimmten vorgegebenen Bremsvermögens erfordert, kann die regenerative Bremse mit Einspeisung in Energiespeicher hingegen derzeit nicht genutzt werden. Hierdurch muss das Bremssystem des Schienenfahrzeugs derart ausgelegt sein, dass über den gesamten Geschwindigkeitsbereich eine Bremsung mit dem vorgegebenen Bremsvermögen mittels der Reibungsbremse sowie gegebenenfalls mittels ergänzender Magnetschienenbremsen und Wirbelstrombremsen gewährleistet ist. Sofern die elektrodynamische Bremse einen anrechenbaren Anteil an diesem Bremsvermögen haben soll, muss die Bremse Bremswiderstände aufweisen, in denen generatorisch erzeugte elektrische Energie in Wärme umgewandelt wird, welche an die Umgebungsatmosphäre abgegeben wird. Die elektrodynamische Bremse wirkt somit als Widerstandsbremse.

Ein Grund dafür, dass die regenerative Bremse nicht auf das Bremsvermögen anrechenbar ist, liegt in dem Führen eines Nachweises eines von der elektrodynamischen Bremse ausgehenden ausschließlichen Bremsmoments. Entsprechend einem Bremsmoment kann ebenso ein Antriebsmoment von den Antriebsmotoren des Antriebssystems bzw. der elektrodynamischen Bremse ausgehen. Insbesondere wenn das Antriebssystem mit dem Versorgungsnetz und/oder Energiespeichern verbunden ist, kann elektrische Energie sowohl von dem Versorgungsnetz als auch von den Energiespeichern in Richtung der Antriebsmotoren fließen und dort ein Antriebsmoment anstelle eines gewünschten Bremsmoments erzeugen. Um ein solches ungewolltes Antreiben insbesondere bei einer Schnellbremsung zu verhindern, wird derzeit beispielsweise das Antriebssystem von der Energieversorgung getrennt. Sofern das Antriebssystem mit einem streckenseitigen Versorgungsnetz verbunden ist, kann diese Trennung beispielsweise durch ein manuell oder automatisiert initiiertes Öffnen eines Hauptschalters und Absenken eines Stromabnehmers erfolgen, über die das Antriebssystem mit dem Versorgungsnetz verbunden ist. Entsprechend können auch die elektrischen Energiespeicher durch gesteuertes Öffnen von Schaltern bzw. Schützen, über welche die Energiespeicher mit weiteren Komponenten des Antriebssystems verbunden sind, von diesen getrennt werden.

Nachteilig bleibt hierdurch einerseits bei einer Schnellbremsung generatorisch erzeugte elektrische Energie ungenutzt, da sie nicht in elektrische Energiespeicher eingespeist werden kann, andererseits muss die verschleißbehaftete Reibungsbremse weiterhin für ein hohes Bremsvermögen dimensioniert werden.

Aufgabe der Erfindung ist es daher, ein Antriebssystem, ein Schienenfahrzeug mit einem solchen Antriebssystem sowie ein Verfahren anzugeben, mittels welchen eine Anrechenbarkeit der regenerativen Bremse auf das Bremsvermögen des Bremssystems eines Schienenfahrzeugs ermöglicht wird. Diese Aufgabe wird von einem Antriebssystem, einem Schienenfahrzeug und einem Verfahren mit den jeweiligen Merkmalen der unabhängigen Patentansprüche gelöst. Weiterbildungen der Erfindung sind in jeweiligen abhängigen Patentansprüchen angegeben.

Ein erfindungsgemäßes elektrisches Antriebssystem für ein Schienenfahrzeug umfasst einen Stromrichter, welcher zumindest einen Gleichspannungszwischenkreis und zumindest einen mit diesem verbundenen steuerbaren Wechselrichter aufweist, eine Anzahl Antriebsmotoren, welche mit dem Wechselrichter verbunden sind, zumindest einen Energiespeicher zur Speicherung elektrischer Energie, einen mit dem Gleichspannungszwischenkreis und dem Energiespeicher verbundenen steuerbaren bidirektionalen ersten Gleichspannungswandler, einen ersten Verbindungspfad, über welchen der Energiespeicher mit dem Wechselrichter verbunden ist, und eine Steuereinrichtung, welche ausgestaltet ist, während eines Betriebs des Antriebssystems den ersten Gleichspannungswandler derart zu steuern, dass der Energiespeicher aus dem Gleichspannungszwischenkreis geladen wird und in den Gleichspannungszwischenkreis entladen wird. Das Antriebssystem ist dadurch gekennzeichnet, dass es ergänzend einen zweiten Verbindungspfad umfasst, über welchen der Energiespeicher mit dem Wechselrichter verbunden ist, und welcher abschnittsweise parallel zu dem ersten Verbindungspfad geschaltet ist, zumindest eine in dem parallelen Abschnitt des zweiten Verbindungspfads angeordnete Diode umfasst, welche ausgestaltet ist, ein Speisen des Wechselrichters mit in dem Energiespeicher gespeicherter elektrischer Energie zu verhindern, zumindest einen steuerbaren ersten Schalter umfasst, welcher ausgestaltet ist, den ersten Verbindungspfad zu öffnen und zu schließen, und die Steuereinrichtung ergänzend ausgestaltet ist, bei Anforderung einer Schnellbremsung während eines Antriebs- oder Bremsbetriebs des Antriebssystems den ersten Verbindungspfad mittels des zumindest einen ersten Schalters zu öffnen, sodass der Energiespeicher während der Schnellbremsung ausschließlich über den zweiten Verbindungspfad mit von der Anzahl Antriebsmotoren und dem Wechselrichter elektrodynamisch generierter Energie ladbar ist.

Das erfindungsgemäße Antriebssystem erlaubt die Nutzung der verschleißfreien elektrodynamischen Bremse als regenerative Bremse auch während einer Schnellbremsung, wodurch ein insbesondere bei einer solchen Bremsung auftretender erhöhter Verschleiß der Reibungsbremse des Schienenfahrzeugs vorteilhaft verringert bzw. vermieden werden kann.

Der Begriff des Betriebs des Antriebssystems umfasst sowohl Stillstandsphasen als auch alle Bewegungsphasen des Schienenfahrzeugs einschließlich des Beschleunigens, Rollens und Bremsens. Eine Schnellbremsung stellt dabei einen speziellen Fall des Bremsens dar, während der ein vorgegebenes Bremsvermögen von den Bremsen des Schienenfahrzeugs zuverlässig bereitgestellt werden muss.

Das Antriebssystem kann dabei mit einem fahrzeugexternen Versorgungsnetz verbunden sein und aus diesem mit elektrischer Energie gespeist werden sowie, sofern dies möglich ist, in dieses zurückspeisen. Alternativ kann das Antriebssystem nicht mit einem solchen Versorgungsnetz verbunden sein, insbesondere während des Befahrens von Strecken bzw. Streckenabschnitten ohne Versorgungsnetz, und aus dem Energiespeicher gespeist werden bzw. in diesen zurückspeisen. Ebenso kann das Schienenfahrzeug eine fahrzeuginterne elektrische Energiequelle, beispielsweise ein oder mehrere Brennstoffzellensysteme, umfassen, mittels welcher das Antriebssystem gespeist werden kann.

Der zumindest eine mit dem Gleichspannungszwischenkreis verbundene Wechselrichter ist vorzugsweise als ein Pulswechselrichter ausgestaltet, welcher die eingangsseitige Gleichspannung des Gleichspannungszwischenkreises in eine Dreiphasen-Wechselspannung variabler Spannungshöhe und Frequenz wandelt, mit welcher Wicklungen des bzw. der als Drehstrommaschinen ausgestalteten Antriebsmotoren gespeist werden. Die Antriebsmotoren können als Asynchronmaschinen oder als Synchronmaschinen ausgestaltet sein, wobei beispielsweise mehrere Asynchronmaschinen, insbesondere zwei gemeinsam in einem Drehgestell des Schienenfahrzeugs angeordnete Antriebsmotoren, gemeinsam von einem Wechselrichter gespeist werden können, während für jede Synchronmaschine üblicherweise ein jeweiliger Wechselrichter vorgesehen wird.

Der steuerbare erste Gleichspannungswandler dient dazu, das Spannungsniveau des Gleichspannungszwischenkreises an das Spannungsniveau des Energiespeichers derart anzupassen, dass ein Stromfluss von dem Gleichspannungszwischenkreis in Richtung des Energiespeichers erfolgt, wodurch der Energiespeicher geladen wird, bzw. das Spannungsniveau des Energiespeichers an das Spannungsniveau des Gleichspannungszwischenkreises derart anzupassen, dass ein Stromfluss von dem Energiespeicher in Richtung des Gleichspannungszwischenkreises erfolgt, wodurch der Energiespeicher entladen wird.

Der zumindest eine elektrische Energiespeicher ist vorzugsweise als eine Antriebs- bzw. Traktionsbatterie ausgestaltet. Eine solche Antriebsbatterie umfasst eine Vielzahl von elektrochemischen Batteriezellen, welche entsprechend der gewünschten Spannung und Kapazität in Serie und parallel geschaltet sind. Entsprechend der einleitenden Beschreibung dient eine Antriebsbatterie einer Versorgung des Antriebssystems, von Hilfsbetrieben sowie von Komfortverbrauchern des Schienenfahrzeugs, wenn das Schienenfahrzeug bzw. das Antriebssystem nicht mit einem streckenseitigen Versorgungssystem verbunden ist, beispielsweise wenn das Schienenfahrzeug eine nicht- oder nur teilelektrifizierte Strecke befährt. Eine Antriebsbatterie unterscheidet sich dabei von einer üblicherweise ergänzend vorgesehenen so genannten Bordnetzbatterie, welche dazu dient, die Versorgung mit dem Bordnetz verbundener bestimmter elektrischer Verbraucher zu gewährleisten, wenn das Schienenfahrzeug nicht mit einem Versorgungsnetz verbunden ist oder auch das Antriebssystem nicht in Betrieb ist. Das Antriebssystem des Schienenfahrzeugs wird aus der Bordnetzbatterie hingegen üblicherweise nicht oder nur sehr beschränkt, beispielsweise für eine Notfahrt, versorgt. Alternativ oder ergänzend zu einer Antriebsbatterie können beispielsweise Doppelschichtkondensatoren, insbesondere in Form so genannter Superkondensatoren, als elektrische Energiespeicher eingesetzt werden.

Der erfindungsgemäße erste Verbindungspfad stellt eine elektrische Verbindung zwischen dem Energiespeicher und dem Wechselrichter dar, welche neben elektrischen Leitungen und Stromschienen weitere aktive elektrische Komponenten, insbesondere den ersten Gleichspannungswandler sowie passive elektrische Komponenten, beispielsweise Kondensatoren und Drosseln, umfassen kann. Über diesen ersten Verbindungspfad fließt ein Gleichstrom von dem Energiespeicher zu dem Wechselrichter, wodurch der Energiespeicher entladen wird, bzw. von dem Wechselrichter zu dem Energiespeicher, wodurch der Energiespeicher geladen wird. Sofern alle in dem ersten Verbindungspfad angeordneten bzw. mit diesem verbundenen elektrischen Komponenten mit einem gemeinsamen negativen Spannungspotenzial verbunden sind, kann die elektrische Verbindung zwischen diesen auf das positive Spannungspotenzial der Gleichspannung beschränkt sein.

Der erfindungsgemäße zweite Verbindungspfad stellt beispielsweise in einen bestimmten Abschnitt des ersten Verbindungspfad eine alternative Verbindung bereit, welche elektrisch parallel zu der Verbindung des korrespondierenden Abschnitts des ersten Verbindungspfads geschaltet ist. Die zumindest eine Diode ist in dieser alternativen Verbindung des zweiten Verbindungspfads angeordnet. Der zweite Verbindungspfad umfasst somit einen Abschnitt, der elektrisch parallel zu einem korrespondierenden Abschnitt des ersten Verbindungspfads geschaltet ist.

Der steuerbare erste Schalter ist vorzugsweise als ein Schütz ausgestaltet, welches sowohl unter Last als auch in einem stromlosen Zustand geschaltet werden kann. Insbesondere kann der Schalter derart ausgestaltet sein, dass er ausschließlich das positive Spannungspotenzial des Verbindungspfads trennt oder dass er sowohl das positive als auch das negative Spannungspotenzial des Verbindungspfads trennt. Der stromlose Zustand kann dabei beispielsweise durch eine Steuerung des ersten Gleichspannungswandlers entsprechend einer so genannten Taktsperre erzielt werden, in welcher beispielsweise alle Leistungshalbleiterschalter des ersten Gleichspannungswandlers nicht angesteuert und damit in einem Sperrzustand sind, wodurch ein Stromfluss zwischen dem Energiespeicher und dem Wechselrichter unterbrochen wird.

Die zumindest eine Diode, aus Redundanzgründen können ebenso mehrere in Serie geschaltete Dioden in dem parallelen Abschnitt des zweiten Verbindungspfads vorgesehen sein, weist vorzugsweise eine Sperrspannung auf, welche deutlich oberhalb einer in dem Antriebssystem maximal auftretenden Spannung liegt. Hierdurch wird sichergestellt, dass kein Stromfluss von dem Energiespeicher in Richtung des Wechselrichters über die Diode möglich ist. Vorzugsweise ist die eine Diode bzw. sind die mehreren Dioden jeweils ungesteuert ausgestaltet.

Die eine bzw. die mehreren in dem parallelen Abschnitt des zweiten Verbindungspfads angeordneten Dioden sollten vorzugsweise in bestimmten zeitlichen Abständen hinsichtlich ihrer Funktion geprüft werden. Eine Prüfung der Sperrfunktion kann seitens der Steuereinrichtung beispielsweise derart erfolgen, dass bei Vorliegen eines entladenen Gleichspannungszwischenkreises, beispielsweise wenn der zumindest eine Zwischenkreiskondensator vollständig entladen ist, bei geöffnetem ersten Verbindungspfad und bei geschlossenem zweiten Verbindungspfad von der Steuereinrichtung erfasst wird, ob der Energiespeicher über diesen Verbindungspfad bzw. über die Diode entladen wird. Dies kann von der Steuereinrichtung beispielsweise auf Basis von Messungen eines Stromflusses in dem ersten Verbindungspfad außerhalb des parallelen Abschnitts des zweiten Verbindungspfads, in dem zweiten Verbindungspfad und/oder auf Basis von Messungen einer Spannung an dem Zwischenkreiskondensator bestimmt werden. Sofern eine fehlerhafte Funktion der Diode bzw. Dioden festgestellt wurde, kann die Steuereinrichtung beispielsweise die Ausgabe einer Alarmmeldung initiieren, um beispielsweise die fahrzeugführende Person auf das Vorliegen einer Fehlfunktion hinzuweisen. Infolge der Fehlfunktion wird, beispielsweise von der fahrzeugführenden Person oder automatisiert, der zweite Verbindungspfad dauerhaft geöffnet und die Nutzung der regenerativen Bremse während einer Schnellbremsung unterbunden, um ein mögliches Entladen des Energiespeichers über den zweiten Verbindungspfad und ein daraus möglicherweise resultierendes ungewolltes Antreiben zu verhindern. Insbesondere abhängig von einer Dimensionierung der Reibungsbremse des Bremssystems kann zudem die erlaubte Höchstgeschwindigkeit des Schienenfahrzeugs reduziert werden.

Die Anforderung einer Schnellbremsung empfängt die Steuereinrichtung beispielsweise von der das Schienenfahrzeug führenden Person, von einer übergeordneten, beispielsweise das Schienenfahrzeug steuernden zentralen Fahrzeugsteuerung bzw. einem solchen Fahrzeugsteuerungssystem, oder von einem Zugsicherungssystem.

Die erfindungsgemäße Steuereinrichtung ist beispielsweise als eine Antriebssteuerung ausgestaltet, welche die verschiedenen Komponenten des Antriebssystems, insbesondere die Komponenten der elektrodynamischen Bremse, steuert. Die Steuereinrichtung ist beispielsweise mit einer übergeordneten Fahrzeugsteuerung und über diese oder direkt mit einer separaten Bremssteuerung verbunden, welche insbesondere die Reibungsbremse des Bremssystems steuert. Alternativ kann diese Bremssteuerung auch als Teil der erfindungsgemäßen Steuereinrichtung verwirklicht sein.

Zum Steuern der verschiedenen Komponenten des Antriebssystems bzw. der elektrodynamischen Bremse generiert die Steuereinrichtung Steuersignale, welche sie signaltechnisch zu den Komponenten überträgt. Beispielsweise dienen diese über geeignete Schnittstellen übertragenen Steuersignale dazu, Leistungshalbleiterschalter in dem Wechselrichter derart zu schalten, dass sie während eines Antreibens die Gleichspannung des Gleichspannungszwischenkreises in eine Dreiphasen-Wechselspannung variabler Amplitude und Frequenz wandeln, um mit dieser Wicklungen der Antriebsmotoren antreibend zu speisen, und dass sie während eines elektrodynamischen Bremsens die Dreiphasen-Wechselspannung der Antriebsmotoren in die Gleichspannung des Gleichspannungszwischenkreises wandeln. Ebenso dienen die Steuersignale der Steuereinrichtung dazu, die Leistungshalbleiterschalter in dem ersten Gleichspannungswandler derart zu schalten, dass sie für ein Laden des Energiespeichers die Gleichspannung des Gleichspannungszwischenkreises in eine an das Spannungsniveau des Energiespeichers angepasste Gleichspannung wandeln, welche zu einem Stromfluss in Richtung des Energiespeichers führt, und dass sie für ein Entladen des Energiespeichers das Spannungsniveau des Energiespeichers in eine an das Spannungsniveau des Gleichspannungszwischenkreises angepasste Gleichspannung wandeln, welche zu einem Stromfluss in Richtung des Gleichspannungszwischenkreises führt.

Nach einer Weiterbildung des erfindungsgemäßen Antriebssystems ist der erste Schalter ergänzend ausgestaltet, den zweiten Verbindungspfad zu öffnen und zu schließen.

Insbesondere kann der erste Schalter als ein Wechselschalter ausgestaltet sein, welcher alternativ den ersten Verbindungspfad oder den zweiten Verbindungspfad öffnet bzw. schließt.

Nach einer alternativen weiteren Weiterbildung des erfindungsgemäßen Antriebssystems umfasst dieses ergänzend zumindest einen steuerbaren zweiten Schalter, welcher ausgestaltet ist, den zweiten Verbindungspfad zu öffnen und zu schließen.

Mittels dieses zweiten Schalters können der erste und der zweite Verbindungspfad unabhängig voneinander von der Steuereinrichtung geöffnet und geschlossen werden. Das Schalten der beiden Schalter erfolgt beispielsweise individuell oder gemeinsam durch die Steuereinrichtung. Ein individuelles, insbesondere sequenzielles Schalten ermöglicht dabei, dass bei Anforderung einer Schnellbremsung beispielsweise zunächst der erste Schalter geöffnet wird und erst nach Abschluss des Öffnungsvorgangs der zweite Schalter geschlossen wird, sofern dieser nicht bereits zuvor geschlossen wurde. Alternativ wird beispielsweise zunächst der zweite Schalter geschlossen, bevor der erste Schalter geöffnet wird. Hierdurch wird eine Unterbrechung des Stromflusses zu dem Energiespeicher verhindert.

Nach einer auf der vorstehenden Weiterbildung basierenden weiteren Weiterbildung des erfindungsgemäßen Antriebssystems ist die Steuereinrichtung ergänzend ausgestaltet, bei Anforderung der Schnellbremsung den zuvor geöffneten zweiten Verbindungspfad mittels des zumindest einen zweiten Schalters zu schließen oder den bereits geschlossenen zweiten Verbindungspfad geschlossen zu halten.

Insbesondere während des normalen Antriebs- und Bremsbetriebs des Antriebssystems können sowohl der erste als auch der zweite Verbindungspfad geschlossen sein, sodass der Energiespeicher über beide Verbindungspfade geladen wird. Nach Anforderung einer Schnellbremsung wird der erste Verbindungspfad mittels des ersten Schalters geöffnet, während der zweite Verbindungspfad geschlossen bleibt.

Nach einer weiteren Weiterbildung des erfindungsgemäßen Antriebssystems ist der parallele Abschnitt des zweiten Verbindungspfads zwischen dem ersten Gleichspannungswandler und dem Energiespeicher angeordnet.

Der parallele Abschnitt des zweiten Verbindungspfads ist demnach elektrisch parallel zu einem korrespondierenden Abschnitt des ersten Verbindungspfads geschaltet, wobei diese jeweils nur einen Teilabschnitt der elektrischen Verbindung zwischen den beiden Komponenten darstellen können.

Nach einer zu der vorstehenden Weiterbildung alternativen weiteren Weiterbildung des erfindungsgemäßen Antriebssystems umfasst dieses ergänzend einen parallel zu dem ersten Gleichspannungswandler geschalteten steuerbaren unidirektionalen zweiten Gleichspannungswandler, wobei der erste Gleichspannungswandler in dem ersten Verbindungspfad und der zweite Gleichspannungswandler in dem zweiten Verbindungspfad angeordnet sind, und ist die Steuereinrichtung ergänzend ausgestaltet, den zweiten Gleichspannungswandler derart zu steuern, dass der Energiespeicher insbesondere während der Schnellbremsung über den zweiten Verbindungspfad geladen wird.

Nach dieser Weiterbildung ist der Energiespeicher neben dem ersten Gleichspannungswandler ebenfalls über den zweiten Gleichspannungswandler mit dem Gleichspannungszwischenkreis des Antriebssystems verbunden. Gegenüber dem ersten Gleichspannungswandler kann der zweite Gleichspannungswandler vorteilhaft insbesondere hinsichtlich der Verschaltung von Leistungshalbleiterschaltern einfacher ausgestaltet sein, da diese ausschließlich einer Wandlung bzw. einer Anpassung des Spannungsniveaus des Gleichspannungszwischenkreises an das Spannungsniveau des Energiespeichers dienen mit dem Ziel, den Energiespeicher aus dem Gleichspannungszwischenkreis über den zweiten Verbindungspfad zu laden.

Nach einer von den beiden vorstehenden Weiterbildungen abweichenden weiteren alternativen Weiterbildung des erfindungsgemäßen Antriebssystems ist der parallele Abschnitt des zweiten Verbindungspfads zwischen dem Wechselrichter und dem ersten Gleichspannungswandler angeordnet.

Beispielsweise kann der zweite Verbindungspfad parallel zu einem Abschnitt des Gleichspannungszwischenkreises des Stromrichters angeordnet sein, wodurch die zumindest eine Diode, welche während der Schnellbremsung einen Stromfluss in Richtung des Wechselrichters und damit ein mögliches ungewolltes Antreiben verhindert, ergänzend ebenso einen Stromfluss von einem Versorgungsnetz zu dem Wechselrichter verhindern kann. Die erforderliche Sperrspannung der Diode ist in diesem Fall beispielsweise anhand einer maximalen Spannung des Gleichspannungszwischenkreises zu bestimmen.

Nach einer weiteren Weiterbildung des erfindungsgemäßen Antriebssystems sind in dem parallelen Abschnitt des ersten Verbindungspfads der erste Schalter und in dem parallelen Abschnitt des zweiten Verbindungspfads der zweite Schalter angeordnet, wobei der zweite Schalter in Serie zu der Diode geschaltet ist.

Nach einer weiteren Weiterbildung des erfindungsgemäßen Antriebssystems ist die Steuereinrichtung ergänzend ausgestaltet, während der Schnellbremsung erfasste Betriebsparameter des Energiespeichers auszuwerten und abhängig von einem Ergebnis der Auswertung ergänzend den geschlossenen zweiten Verbindungspfad zu öffnen.

Verschiedene Betriebsparameter des Energiespeichers können dabei von der Steuereinrichtung während des normalen Betriebs des Antriebssystems und insbesondere während einer Schnellbremsung überwacht werden, um dessen verlässliche Funktion zu gewährleisten. Zu diesen Betriebsparametern gehören insbesondere ein Ladezustand (Englisch: State of Charge, abgekürzt SOC) sowie eine Temperatur des Energiespeichers bzw. von einzelnen Batteriezellen oder Batteriemodulen mit mehreren Batteriezellen. Sofern von der Steuereinrichtung beispielsweise bestimmt wird, dass der Ladezustand des Energiespeichers im Verlauf einer Schnellbremsung einen vorgegebenen Ladezustandsgrenzwert erreicht hat, öffnet die Steuereinrichtung ergänzend zu dem ersten Verbindungspfad auch den zweiten Verbindungspfad, um den Energiespeicher vollständig zu trennen und damit ein fortgesetztes Laden zu verhindern. In gleicher Weise kann der zweite Verbindungspfad von der Steuereinrichtung geöffnet werden, wenn eine Temperatur des Energiespeichers, beispielsweise hervorgerufen durch einen hohen Ladestrom und/oder eine nicht ausreichende Kühlung der Batteriezellen, einen vorgegebenen Temperaturgrenzwert erreicht hat. Hierdurch kann insbesondere eine mögliche Zerstörung oder verstärkte Alterung von Batteriezellen verhindert werden. Sofern das Antriebssystem über Bremswiderstände verfügt, kann die elektrodynamische Bremse nach einem solchen vollständigen Trennen des Energiespeichers von dem Wechselrichter nachfolgend entsprechend einer Widerstandsbremse wirken.

Nach einer weiteren Weiterbildung umfasst das erfindungsgemäße Antriebssystem ergänzend alternativ oder in Kombination zumindest einen steuerbaren Gleichrichter, einen Transformator und einen Stromabnehmer, über welche der Gleichspannungszwischenkreis mit einem einen Einphasen-Wechselstrom führendem fahrzeugexternen Versorgungsnetz verbindbar ist, einen Stromabnehmer und insbesondere ein Eingangsfilter, über welche der Gleichspannungszwischenkreis mit einem einen Gleichstrom führenden externen Versorgungsnetz verbindbar ist, und/oder zumindest ein Brennstoffzellensystem, mit welchem der Gleichspannungszwischenkreis insbesondere über den ersten Gleichspannungswandler verbunden ist.

Typische, insbesondere in Normen definierte Spannungen eines von einem Versorgungsnetz bereitgestellten Einphasen-Wechselstroms sind in Europa 15 kV, 16,7 Hz, oder 25 kV, 50 Hz. - Entsprechende Spannungen eines von einem Versorgungsnetz bereitgestellten Gleichstroms sind in Europa insbesondere 750 V, 1.500 V oder 3.000 V.

Bei einer Verbindung des Antriebssystems mit einem Gleichstrom-Versorgungsnetz kann das Antriebssystem, insbesondere ergänzend zu einem Eingangsfilter, einen

Gleichspannungswandler umfassen, mittels welchem das netzseitige Spannungsniveau an das gewünschte Spannungsniveau des Gleichspannungszwischenkreises angepasst wird.

Sofern das Antriebssystem zumindest ein Brennstoffzellensystem umfasst, welches elektrische Energie für den Betrieb des Antriebssystems bereitstellt, dient der Energiespeicher beispielsweise als ein so genannter Pufferspeicher, welcher insbesondere einem Ausgleich kurzfristiger Änderungen der Leistungsaufnahme des Antriebssystems dient.

Ein erfindungsgemäßes Schienenfahrzeug umfasst zumindest ein erfindungsgemäßes Antriebssystem.

In einem solchen Schienenfahrzeug können die beschriebenen verschiedenen Komponenten des Antriebssystems jeweils mehrfach vorgesehen sein. Beispielsweise kann das Antriebssystem zwei Antriebsstränge mit einem jeweiligen Gleichspannungszwischenkreis umfassen, wobei mit jedem der Gleichspannungszwischenkreise zumindest ein Wechselrichter und ein elektrischer Energiespeicher verbunden sind.

Das Schienenfahrzeug kann insbesondere als ein Triebfahrzeug oder Triebzug mit einer Anzahl bzw. Mehrzahl Wagen für die Personenbeförderung ausgestaltet sein.

Ein erfindungsgemäßes Verfahren zum Steuern eines elektrischen Antriebssystems eines Schienenfahrzeugs, wobei das Antriebssystem einen Stromrichter, welcher zumindest einen Gleichspannungszwischenkreis und zumindest einen mit diesem verbundenen steuerbaren Wechselrichter aufweist, eine Anzahl Antriebsmotoren, welche mit dem Wechselrichter verbunden sind, zumindest einen Energiespeicher zur Speicherung elektrischer Energie, einen mit dem Gleichspannungszwischenkreis und dem Energiespeicher verbundenen steuerbaren bidirektionalen ersten Gleichspannungswandler, einen ersten Verbindungspfad, über welchen der Energiespeicher mit dem Wechselrichter verbunden ist, und eine Steuereinrichtung umfasst, und wobei während eines Betriebs des Antriebssystems der erste Gleichspannungswandler von der Steuereinrichtung derart gesteuert wird, dass der Energiespeicher aus dem Gleichspannungszwischenkreis geladen wird und in den Gleichspannungszwischenkreis entladen wird, ist dadurch gekennzeichnet, dass das Antriebssystem ergänzend einen zweiten Verbindungspfad umfasst, über welchen der Energiespeicher mit dem Wechselrichter verbunden ist, und welcher abschnittsweise parallel zu dem ersten Verbindungspfad geschaltet ist, zumindest eine in dem parallelen Abschnitt des zweiten Verbindungspfads angeordnete Diode umfasst, welche ausgestaltet ist, ein Speisen des Wechselrichters mit in dem Energiespeicher gespeicherter elektrischer Energie zu verhindern, und zumindest einen steuerbaren ersten Schalter umfasst, welcher ausgestaltet ist, den ersten Verbindungspfad zu öffnen und zu schließen, und dass bei Anforderung einer Schnellbremsung während eines Antriebs- oder Bremsbetriebs des Antriebssystems von der Steuereinrichtung der erste Verbindungspfad mittels des zumindest einen ersten Schalters geöffnet wird, um den Energiespeicher während der Schnellbremsung ausschließlich über den zweiten Verbindungspfad mit von der Anzahl Antriebsmotoren und dem Wechselrichter elektrodynamisch generierter Energie zu laden.

Nach einer Weiterbildung des erfindungsgemäßen Verfahrens umfasst das Antriebssystem ergänzend einen parallel zu dem ersten Gleichspannungswandler geschalteten steuerbaren unidirektionalen zweiten Gleichspannungswandler, wobei der erste Gleichspannungswandler in dem ersten Verbindungspfad und der zweite Gleichspannungswandler in dem zweiten Verbindungspfad angeordnet sind, und wird der zweite Gleichspannungswandler von der Steuereinrichtung insbesondere während der Schnellbremsung derart gesteuert, dass der Energiespeicher über den zweiten Verbindungspfad ladbar ist.

Nach einer weiteren Weiterbildung des erfindungsgemäßen Verfahrens werden während der Schnellbremsung erfasste Betriebsparameter des Energiespeichers von der Steuereinrichtung ausgewertet, und wird abhängig von einem Ergebnis der Auswertung der zweite Verbindungspfad von der Steuereinrichtung, insbesondere als eine Schutzreaktion, geöffnet.

Nachfolgend wird die Erfindung anhand von Ausführungsbeispielen näher erläutert. Dabei zeigen:
- FIG 1: ein Schienenfahrzeug mit einem Antriebssystem für eine netzseitige Wechselstromversorgung,
- FIG 2: eine erste Ausgestaltung des erfindungsgemäßen Antriebssystems,
- FIG 3: eine zweite Ausgestaltung des erfindungsgemäßen Antriebssystems,
- FIG 4: die zweite Ausgestaltung der FIG 3 mit einer alternativen Schalterstellung während einer Schnellbremsung,
- FIG 5: eine dritte Ausgestaltung des erfindungsgemäßen Antriebssystems,
- FIG 6: die dritte Ausgestaltung der FIG 4 mit einer alternativen Schalterstellung während einer Schnellbremsung,
- FIG 7: eine vierte Ausgestaltung des erfindungsgemäßen Antriebssystems mit einem zweiten Gleichspannungswandler und einer Schalterstellung während einer Schnellbremsung,
- FIG 8: eine fünfte Ausgestaltung des erfindungsgemäßen Antriebssystems mit einem zweiten Gleichspannungswandler und einem zweiten Schalter, und mit einer Schalterstellung während einer Schnellbremsung,
- FIG 9: die fünfte Ausgestaltung der FIG 8 mit einer alternativen Schalterstellung des zweiten Schalters während der Schnellbremsung,
- FIG 10: eine sechste Ausgestaltung des erfindungsgemäßen Antriebssystems,
- FIG 11: die sechste Ausgestaltung der FIG 10 mit einer Schalterstellung während einer Schnellbremsung,
- FIG 12: ein Schienenfahrzeug mit einem erfindungsgemäßen alternativen Antriebssystem für eine netzseitige Gleichstromversorgung,
- FIG 13: eine Ausgestaltung des erfindungsgemäßen alternativen Antriebssystems,
- FIG 14: ein Schienenfahrzeug mit einem erfindungsgemäßen weiteren alternativen Antriebssystem ohne netzseitige Energieversorgung, und
- FIG 15: eine Ausgestaltung des erfindungsgemäßen weiteren alternativen Antriebssystems.

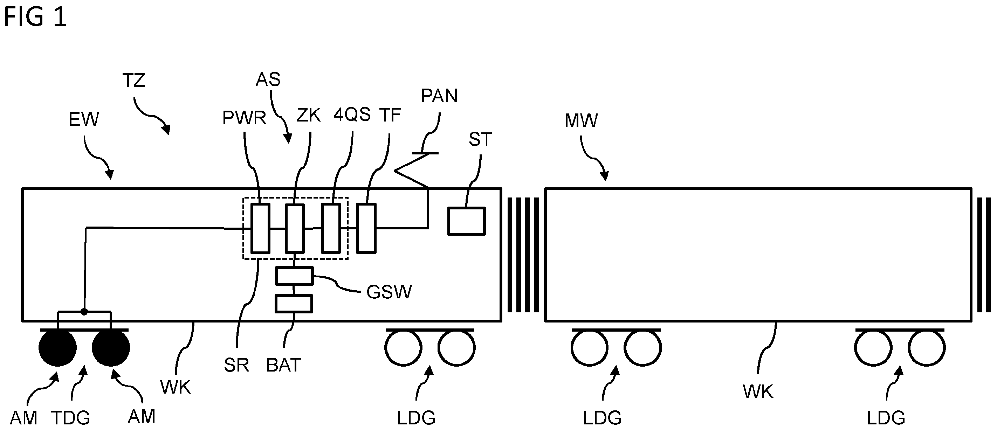

FIG 1 zeigt schematisch ein Schienenfahrzeug, welches beispielhaft als ein Triebzug TZ für die Personenbeförderung ausgestaltet ist. Eine Ausgestaltung des Schienenfahrzeugs als ein Triebwagen oder eine Lokomotive ist ebenfalls denkbar, wird im Folgenden jedoch nicht weiter betrachtet.

Der beispielhafte Triebzug TZ umfasst eine Mehrzahl Wagen, von denen lediglich ein Endwagen EW und ein Mittelwagen MW dargestellt sind. Die Wagen EW, MW bzw. deren nicht speziell dargestellten Fahrgasträume sind über Wagenübergänge miteinander verbunden. Die Wagenkästen WK der Wagen EW, MW stützen sich über jeweils zwei Drehgestelle auf Schienen eines nicht dargestellten Gleises ab. Dabei ist ein äußeres erstes Drehgestell des Endwagens EW als ein Triebdrehgestell TDG ausgestaltet, in welchem zwei Radsätze von einem jeweiligen Antriebsmotor AM angetrieben werden, während ein inneres zweites Drehgestell des Endwagens EW sowie die beiden Drehgestelle des Mittelwagens jeweils als ein antriebsloses Laufdrehgestell LDG ausgestaltet sind. Im Bereich eines Wagenübergangs können die Wagenkästen WK benachbarter Wagen alternativ ebenso auf einem gemeinsamen Drehgestell, auch als Jakobs-Drehgestell bezeichnet, abgestützt sein. Ebenso können die Drehgestelle alternativ auch jeweils nur einen Radsatz umfassen.

Neben den beiden Antriebsmotoren AM in dem äußeren Triebdrehgestell TDG umfasst das Antriebssystem AS des Triebzugs TZ einen Transformator TF, dessen Primärseite über einen Stromabnehmer PAN, beispielsweise einen Pantographen, mit einer nicht dargestellten Oberleitung eines streckenseitigen Versorgungsnetzes verbindbar ist, um das Antriebssystem AS mit einem Einphasen-Wechselstrom zu versorgen. Die Sekundärseite des Transformators TF ist mit einem Stromrichter SR, speziell mit einem Gleichrichter 4QS bzw. vorzugsweise einem steuerbaren bidirektionalen Gleichrichter in Form eines Vierquadrantenstellers verbunden. Der Gleichrichter 4QS wandelt die Einphasen-Wechselspannung der Sekundärseite des Transformators TF in eine Gleichspannung und speist diese in den Gleichspannungszwischenkreis ZK des Stromrichters SR. In der Ausgestaltung als ein Vierquadrantensteller wandelt der Gleichrichter 4QS ergänzend die Gleichspannung des Gleichspannungszwischenkreises ZK in eine Einphasen-Wechselspannung für eine Rückspeisung in das Versorgungsnetz. Grundsätzlich kann der Stromrichter SR mehrere Gleichrichter 4QS bzw. Vierquadrantensteller umfassen, welche mit der Sekundärseite bzw. einer jeweiligen Sekundärwicklung des Transformators TF verbunden sind, wobei die Gleichrichter 4QS einen gemeinsamen oder jeweiligen Gleichspannungszwischenkreis ZK speisen.

Mit dem Gleichspannungszwischenkreis ZK ist beispielhaft ein Wechselrichter PWR verbunden. Der Wechselrichter PWR, welcher vorzugsweise als ein Pulswechselrichter ausgestaltet ist, wandelt die Gleichspannung des Gleichspannungszwischenkreises ZK in eine Dreiphasen-Wechselspannung variabler Spannungshöhe und Frequenz, mit welcher Statorwicklungen der beiden beispielhaft als Drehstrom-Asynchronmaschinen ausgestalteten Antriebsmotoren AM gespeist werden. Grundsätzlich kann der Stromrichter SR mehrere Wechselrichter PWR bzw. Pulswechselrichter umfassen, welche jeweils mit dem Gleichspannungszwischenkreis ZK sowie einem oder mehreren Antriebsmotoren AM verbunden sind.

Der Gleichspannungszwischenkreis ZK ist weiterhin über einen Gleichspannungswandler GSW mit einen Energiespeicher BAT verbunden. Der Gleichspannungswandler GSW ist dabei beispielsweise als ein steuerbarer bidirektionaler Gleichstromsteller ausgestaltet.

Der mit dem Gleichspannungswandler GSW verbundene Energiespeicher BAT ist als eine Antriebs- bzw. Traktionsbatterie ausgestaltet. Diese umfasst beispielhaft eine Vielzahl von Batteriezellen, welche entsprechend der gewünschten Spannung und Kapazität in Serie und parallel geschaltet sind. Die Antriebsbatterie dient einer Versorgung des Antriebssystems AS sowie von Hilfsbetrieben und Komfortverbrauchern des Triebzugs TZ, wenn dieser Strecken bzw. Streckenabschnitte ohne streckenseitigem Versorgungsnetz befährt. Alternativ oder ergänzend zu Batteriezellen kann der Energiespeicher BAT beispielsweise Doppelschichtkondensatoren, insbesondere in Form so genannter Superkondensatoren, umfassen.

Gesteuert werden die aufgeführten Komponenten des Antriebssystems AS des Triebzugs TZ, insbesondere Leistungshalbleiterschalter in diesen Komponenten, von einer Steuereinrichtung ST, welche über nicht speziell dargestellte Signalleitungen bzw. Kommunikationsschnittstellen mit diesen verbunden ist.

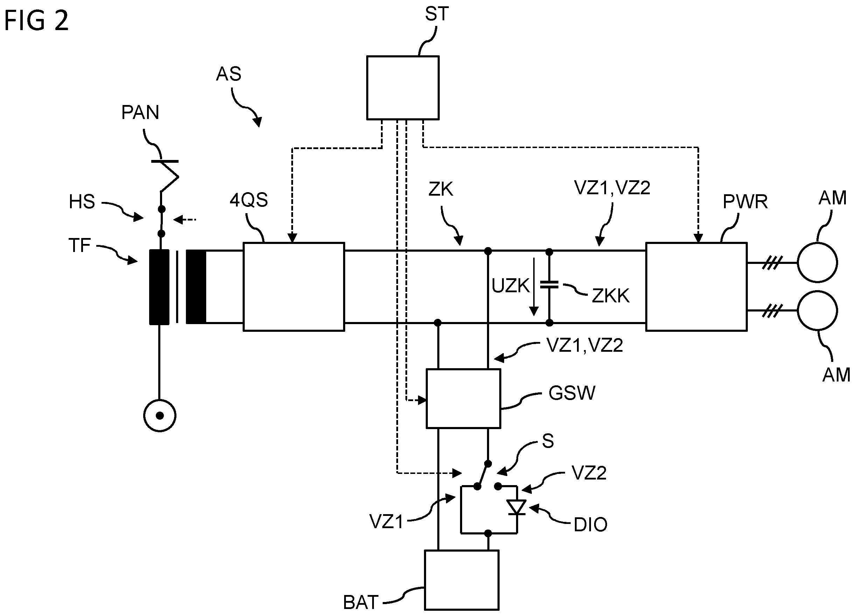

FIG 2 zeigt schematisch das Antriebssystem AS des Triebzugs TZ der FIG 1 in einer ersten erfindungsgemäßen Ausgestaltung. Der Gleichspannungszwischenkreis ZK ist entsprechend über den Gleichrichter 4QS bzw. Vierquadrantensteller mit der Sekundärseite bzw. einer Sekundärwicklung des Transformators TF verbunden. Die Primärseite bzw. Primärwicklung des Transformators TF ist einerseits über einen steuerbaren Hauptschalter HS sowie den Stromabnehmer PAN mit einer wiederum nicht dargestellten Oberleitung des streckenseitigen Versorgungsnetzes verbindbar sowie andererseits über einen oder mehrere Radsätze mit einem Gleis- bzw. Erdpotenzial verbunden. Mittels des insbesondere von der Steuereinrichtung ST steuerbaren Hauptschalters HS kann das Antriebssystem AS von dem Spannungspotenzial des Versorgungsnetzes, insbesondere unter Last, getrennt bzw. mit diesem verbunden werden. An der Oberleitung liegt eine Einphasen-Wechselspannung von beispielsweise 15 kV bei 16,7 Hz oder 25 kV bei 50 Hz an.

Der Gleichrichter 4QS wandelt, durch von der Steuereinrichtung ST gesteuertes geeignetes Schalten von dessen Leistungshalbleiterschaltern, die Einphasen-Wechselspannung der Sekundärseite des Transformators TF in eine Gleichspannung UZK, welche zwischen den beiden Spannungspotenzialen des Gleichspannungszwischenkreises ZK bzw. an einem beispielhaft in dem Gleichspannungszwischenkreis ZK angeordneten Zwischenkreiskondensator ZKK anliegt. In dem Antriebssystem AS der FIG 2 sowie den Antriebssystemen AS der weiteren Figuren weist der dargestellte obere Potenzialzweig des Gleichspannungszwischenkreises ZK ein jeweils positives Spannungspotenzial auf, während der dargestellte untere Potenzialzweig jeweils ein negatives Spannungspotenzial aufweist. Vorzugsweise ist der Gleichspannungszwischenkreis ZK potenzialfrei, also nicht bzw. ausschließlich hochohmig mit dem Massepotenzial des Triebzugs TZ verbunden.

Mit dem Gleichspannungszwischenkreis ZK bzw. dessen Potenzialzweigen ist der steuerbare bidirektionale Wechselrichter PWR verbunden. Während eines Antriebsbetriebs des Antriebssystems AS wandelt der Wechselrichter PWR, durch von der Steuereinrichtung ST gesteuertes geeignetes Schalten von dessen Leistungshalbleiterschaltern, die Gleichspannung UZK des Gleichspannungszwischenkreises ZK in eine Dreiphasen-Wechselspannung mit einer variablen Spannungshöhe und Frequenz, mit welcher der Wechselrichter PWR die Statorwicklungen der beiden Antriebsmotoren AM speist. Während eines Bremsbetriebs des Antriebssystems AS hingegen wandelt der Wechselrichter PWR die von den Antriebsmotoren AM generatorisch erzeugte Dreiphasen-Wechselspannung in die Gleichspannung des Gleichspannungszwischenkreises ZK. Diese Gleichrichtung erfolgt durch von der Steuereinrichtung ST gesteuertes geeignetes Schalten der Leistungshalbleiterschalter des Wechselrichters PWR, um ein Bremsmoment zu erzeugen. Steuersignale der Steuereinrichtung ST sind ausgehend von dieser als gestrichelte Linien zu den verschiedenen gesteuerten Komponenten des Antriebssystems AS dargestellt.

Ebenfalls mit dem Gleichspannungszwischenkreis ZK bzw. dessen Potenzialzweigen ist der steuerbare bidirektionale Gleichspannungswandler GSW verbunden. Dieser ist wiederum mit dem elektrischen Energiespeicher BAT bzw. der Antriebsbatterie des Antriebssystems AS verbunden. Abhängig davon, ob der Energiespeicher BAT geladen oder entladen werden soll, passt der Gleichspannungswandler GSW, durch geeignetes Steuern von dessen Leistungshalbleiterschaltern durch die Steuereinrichtung ST, die Spannung des Gleichspannungszwischenkreises ZK an die Spannung des Energiespeichers BAT an bzw. passt die Spannung des Energiespeichers BAT an die Spannung des Gleichspannungszwischenkreises ZK an, um einen Stromfluss aus dem Gleichspannungszwischenkreis ZK in Richtung des Energiespeichers BAT bzw. aus dem Energiespeicher BAT in Richtung des Gleichspannungszwischenkreises ZK zu generieren. Die Leistungshalbleiterschalter sowie zu diesen jeweils antiparallel geschaltete Freilaufdioden des Gleichspannungswandlers GSW sind vorzugsweise derart geschaltet, dass bei einer Taktsperre ein Stromfluss von dem Gleichspannungszwischenkreis ZK in Richtung des Energiespeichers BAT gesperrt ist, ein Stromfluss von dem Energiespeicher BAT in Richtung des Gleichspannungszwischenkreises ZK hingegen über die Freilaufdioden möglich ist.

Die elektrische Verbindung zwischen dem Wechselrichter PWR und dem Energiespeicher BAT über den oberen Potenzialzweig des Gleichspannungszwischenkreises ZK und den Gleichspannungswandler GSW stellt einen ersten Verbindungspfad VZ1 dar, zu dessen Verdeutlichung die jeweiligen Verbindungsabschnitte zwischen diesen Komponenten mit VZ1 bezeichnet sind.

Zu dem Verbindungsabschnitt des ersten Verbindungspfads VZ1 zwischen dem Gleichspannungswandler GSW und dem Energiespeicher BAT ist ein weiterer Verbindungsabschnitt elektrisch parallel geschaltet. Dieser parallele Verbindungsabschnitt stellt zusammen mit dem Verbindungsabschnitt des ersten Verbindungspfads VZ1 zwischen dem Gleichspannungswandler GSW und dem Wechselrichter PWR einen zweiten Verbindungspfad VZ2 dar.

Zwischen den parallel geschalteten Verbindungsabschnitten des ersten VZ1 und zweiten Verbindungspfads VZ2 kann nach der ersten Ausgestaltung der FIG 2 mittels eines als ein Wechselschalter ausgestalteten Schalters S geschaltet werden, welcher von der Steuereinrichtung ST gesteuert wird. Der Wechselschalter S ist beispielsweise als ein steuerbares Schütz mit mehreren Schaltstellungen ausgestaltet, wobei neben den beiden in der FIG 2 schematisch angegebenen Schaltstellungen für den jeweiligen Verbindungsabschnitt des ersten VZ1 bzw. zweiten Verbindungspfad VZ2 eine nicht speziell dargestellte dritte Schaltstellung vorgesehen sein kann, in welcher keiner der parallelen Verbindungsabschnitte und somit weder der erste VZ1 noch der zweite Verbindungspfad VZ2 geschlossen ist, sondern der Energiespeicher BAT elektrisch vollständig von dem Gleichspannungswandler GSW getrennt ist. Sofern der Wechselschalter S nur die beiden angegebenen Schaltstellungen aufweist, kann eine vollständige Trennung des Energiespeichers BAT durch ergänzende, nicht speziell dargestellte Schütze erfolgen. Der Schalter S ist vorzugsweise sowohl unter Last als auch in einem stromlosen bzw. lastfreien Zustand schaltbar. Für ein stromloses Schalten kann beispielsweise der Gleichspannungswandler GSW bzw. dessen Leistungshalbleiterschalter von der Steuereinrichtung ST derart gesteuert werden, dass dessen Leistungshalbleiterschalter einen Stromfluss sperren. Nach Abklingen des Stromflusses bzw. Erreichen des stromlosen Zustands kann der Schalter S durch die Steuereinrichtung ST geschaltet werden.

In dem parallelen Verbindungsabschnitt des zweiten Verbindungspfads VZ2 ist eine Diode DIO angeordnet. Diese beispielhaft nicht steuerbare Diode DIO ist dabei derart angeordnet, dass sie einen Stromfluss ausschließlich in Richtung des Energiespeichers BAT zulässt, in Richtung des Gleichspannungswandlers GSW hingegen sperrt. Die Diode DIO verhindert damit, dass der Gleichspannungszwischenkreis ZK und damit der Wechselrichter PWR über den zweiten Verbindungspfad VZ2 aus dem Energiespeicher BAT gespeist wird, welches zu einem ungewollten Antreiben führen kann.

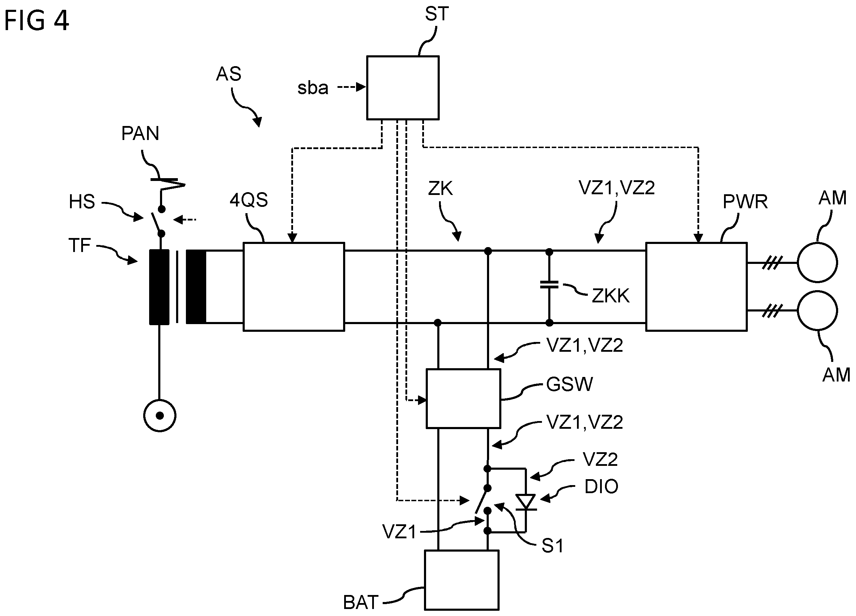

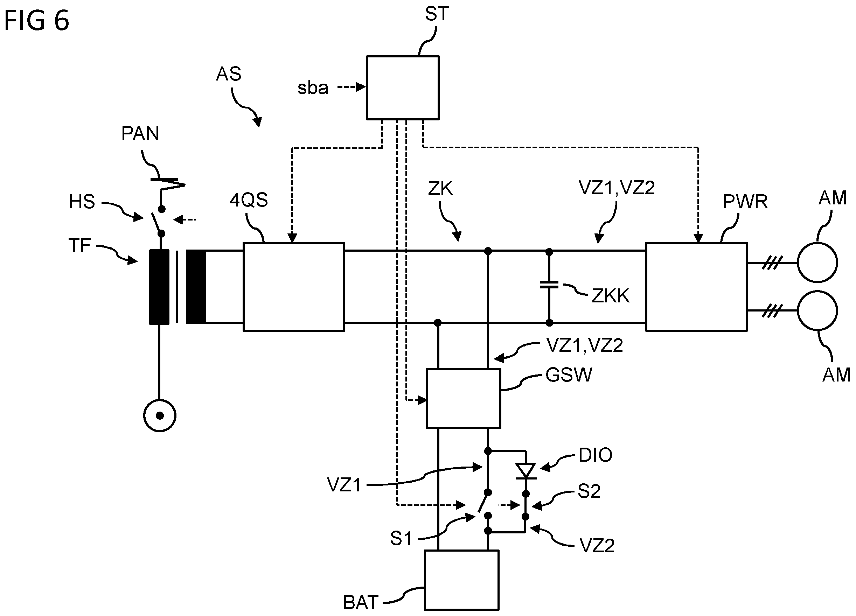

In der Darstellung der FIG 2 ist der Schalter S in einer Schaltstellung, in welcher der erste Verbindungspfad VZ1 geschlossen ist, sodass ein Energiefluss sowohl von dem Wechselrichter PWR in Richtung des Energiespeichers BAT als auch von dem Energiespeicher BAT in Richtung des Wechselrichters PWR möglich ist. Diese Schaltstellung ist für den normalen Antriebs- und Bremsbetrieb des Antriebssystems AS vorgesehen. Ein möglicher Energiefluss in einer anderen Schaltstellung des Wechselschalters S, in welcher der erste Verbindungspfad VZ1 geöffnet und der zweite Verbindungspfad VZ2 geschlossen ist, wird nachfolgend bezüglich der FIG 4 und 6 erläutert.

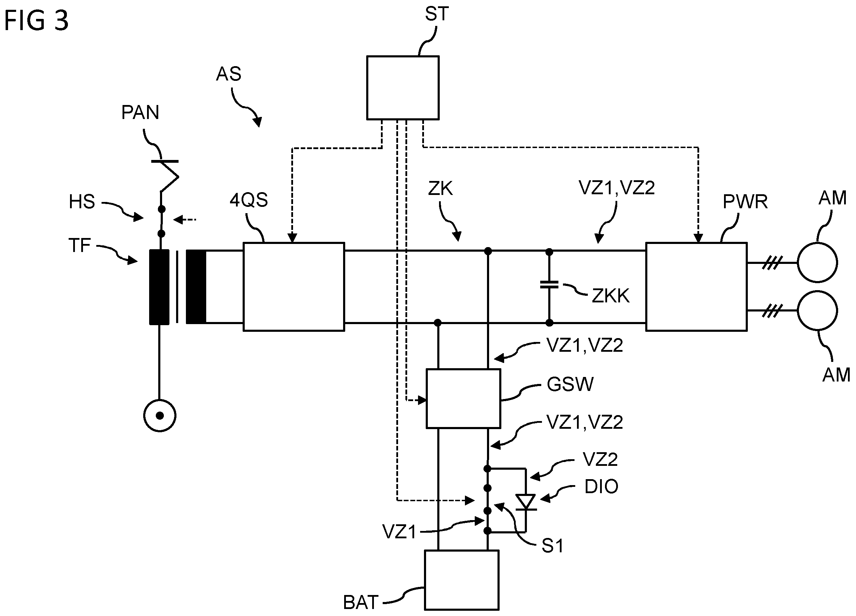

FIG 3 zeigt schematisch das Antriebssystem AS des Triebzugs TZ der FIG 1 in einer zweiten erfindungsgemäßen Ausgestaltung. Im Unterschied zu der vorstehend beschriebenen ersten Ausgestaltung der FIG 2 ist ein steuerbarer erster Schalter S1 in dem parallelen Verbindungsabschnitt des ersten Verbindungspfads VZ1 angeordnet. Der erste Schalter S1 ist beispielsweise wiederum als ein von der Steuereinrichtung ST steuerbares Schütz ausgestaltet, welches jedoch lediglich zwei Schaltstellungen, offen und geschlossen, umfasst. In der dargestellten geschlossenen Schaltstellung, in welcher sowohl der erste Verbindungspfad VZ1 als auch der zweite Verbindungspfad VZ2 geschlossen sind, ist ein Stromfluss von dem Wechselrichter PWR zu dem Energiespeicher BAT über beide Verbindungspfade VZ1, VZ2 möglich, während ein Stromfluss von dem Energiespeicher BAT zu dem Wechselrichter PWR aufgrund der sperrenden Diode DIO ausschließlich über den ersten Verbindungspfad VZ1 erfolgt.

FIG 4 zeigt ergänzend das Antriebssystem AS der FIG 3 in einem Zustand, nachdem die Steuereinrichtung ST eine Schnellbremsanforderung sba von einer übergeordneten Steuereinrichtung des Triebzugs TZ, insbesondere initiiert von einem Zugsicherungssystem oder einer den Triebzug TZ führenden Person, empfangen hat. In Reaktion auf diese empfangene Schnellbremsanforderung sba steuert die Steuereinrichtung ST den ersten Schalter S1 derart an, dass dieser den ersten Verbindungspfad VZ1 öffnet. Aufgrund der in dem parallelen Verbindungsabschnitt des zweiten Verbindungspfads VZ2 angeordneten Diode DIO ist hierdurch ausschließlich ein Stromfluss in Richtung bzw. ein Laden des Energiespeichers BAT möglich, während dieser nicht mehr entladen werden kann. Hierdurch wird wiederum verhindert, dass während einer aufgrund der Schnellbremsanforderung sba aktivierten Schnellbremsung ein Stromfluss von dem Energiespeicher BAT in Richtung des Gleichspannungszwischenkreises ZK und Wechselrichters PWR entstehen kann, welche zu einem ungewollten bzw. nicht zulässigen Antreiben führen könnte.

Ergänzend kann, wie in FIG 4 dargestellt, in Folge des Empfangs der Schnellbremsanforderung sba ein Öffnen des Hauptschalters HS sowie ein Absenken des Stromabnehmers PAN durch die Steuereinrichtung ST gesteuert werden, um das Antriebssystem AS von dem Versorgungsnetz zu trennen. Sofern der Triebzug TZ einen Streckenabschnitt befährt, in welchem kein Versorgungsnetz zur Verfügung steht, sollten der Hauptschalter HS und der Stromabnehmer PAN bereits in diesem Zustand sein.

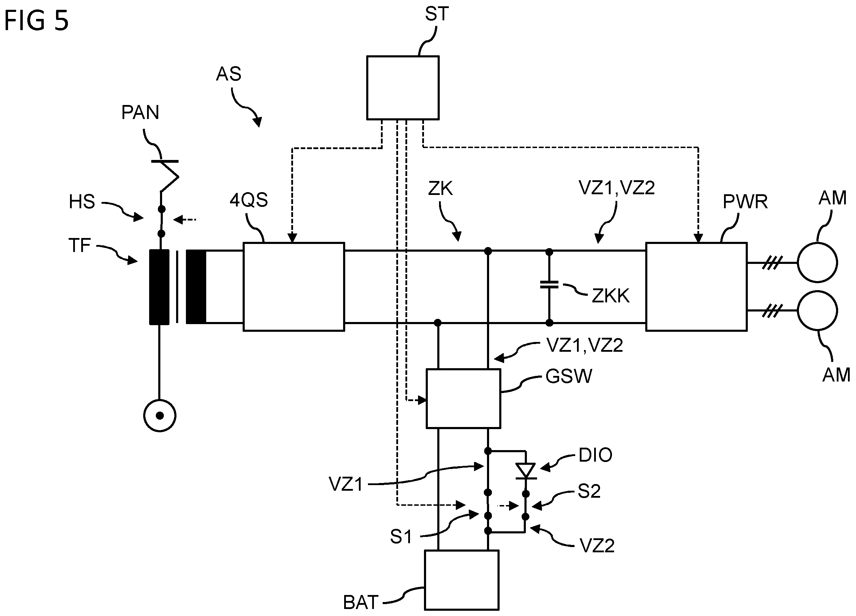

FIG 5 zeigt schematisch das Antriebssystem AS des Triebzugs TZ der FIG 1 in einer dritten erfindungsgemäßen Ausgestaltung. Im Unterschied zu der zweiten Ausgestaltung der FIG 3 ist sowohl in dem parallelen Verbindungsabschnitt des ersten Verbindungspfads VZ1 als auch in dem parallelen Verbindungsabschnitt des zweiten Verbindungspfads VZ2 ein jeweiliger steuerbarer erster Schalter S1 bzw. zweiter Schalter S2 angeordnet. Der gegenüber der zweiten Ausgestaltung der FIG 3 ergänzte zweite Schalter S2 ist in Serie mit der Diode DIO in dem parallelen Verbindungsabschnitt des zweiten Verbindungspfads VZ2 geschaltet.

Als erster und zweiter Schalter S1, S2 kann wiederum beispielsweise ein jeweiliges steuerbares Schütz vorgesehen sein, welches sowohl unter Last als auch zur Reduzierung von Verschleiß bevorzugt in einem stromlosen bzw. lastfreien Zustand schaltbar ist. Für ein stromloses Schalten der Schalter S1, S2 wird wiederum der Gleichspannungswandler GSW von der Steuereinrichtung ST derart angesteuert, dass dessen Leistungshalbleiterschalter einen Stromfluss sperren.

FIG 5 zeigt die jeweilige Schaltstellung des ersten und zweiten Schalters S1, S2 während eines normalen Antriebs- und Bremsbetriebs des Antriebssystems AS. In dieser Betriebsphase ist, von der Steuereinrichtung ST gesteuert, sowohl der erste Schalter S1 und damit der erste Verbindungspfad VZ1 als auch der zweite Schalter S2 und damit der zweite Verbindungspfad VZ2 geschlossen. Hierdurch kann der Energiespeicher BAT, durch entsprechende Steuerung des Gleichspannungswandlers GSW bzw. von dessen Leistungshalbleiterschalter von der Steuereinrichtung ST, sowohl aus dem Gleichspannungszwischenkreis ZK geladen als auch in den Gleichspannungszwischenkreis ZK entladen werden. So kann der Energiespeicher BAT, wenn das Antriebssystem AS wie dargestellt über den geschlossenen Hauptschalter HS und dem angehobenen Stromabnehmer PAN mit dem Versorgungsnetz verbunden ist, mit von dem Versorgungsnetz zugeführter elektrischer Energie geladen werden. Ergänzend kann der Energiespeicher BAT während einer Betriebsbremsung mit elektrischer Energie der elektrodynamischen bzw. regenerativen Bremse, insbesondere alternativ oder ergänzend zu einer Rückspeisung dieser Energie in das Versorgungsnetz, geladen werden. Die in dem Energiespeicher BAT gespeicherte elektrische Energie dient wiederum der Versorgung des Antriebssystems AS sowie von Hilfsbetrieben und Komfortverbrauchern des Triebzugs TZ, wenn das Antriebssystem AS nicht mit dem Versorgungsnetz verbunden ist, beispielsweise während des Befahrens einer nicht elektrifizierten Strecke.

FIG 6 zeigt ergänzend das Antriebssystem AS der FIG 5 in einem Zustand, nachdem die Steuereinrichtung ST eine Schnellbremsanforderung sba von einer übergeordneten Steuereinrichtung des Triebzugs TZ, beispielsweise initiiert von einem Zugsicherungssystem oder einer den Triebzug TZ führenden Person, empfangen hat. In Reaktion auf die empfangene Schnellbremsanforderung sba steuert die Steuereinrichtung ST den ersten Schalter S1 derart an, dass dieser den ersten Verbindungspfad VZ1 öffnet, während sie den zweiten Schalter S2 geschlossen hält, sodass der zweite Verbindungspfad VZ2 weiterhin geschlossen ist. Vorteilhaft wird hierdurch wiederum verhindert, dass während der durch die Schnellbremsanforderung sba aktivierten Schnellbremsung ein Stromfluss von dem Energiespeicher BAT in Richtung des Gleichspannungszwischenkreises ZK und Wechselrichters PWR entstehen kann, welcher zu einem ungewollten bzw. nicht zulässigen Antreiben führen könnte.

Ergänzend wurde, wie vorstehend zu FIG 4 erläutert, in Folge des Empfangs der Schnellbremsanforderung sba ein Öffnen des Hauptschalters HS sowie ein Absenken des Stromabnehmers PAN von der Steuereinrichtung ST gesteuert.

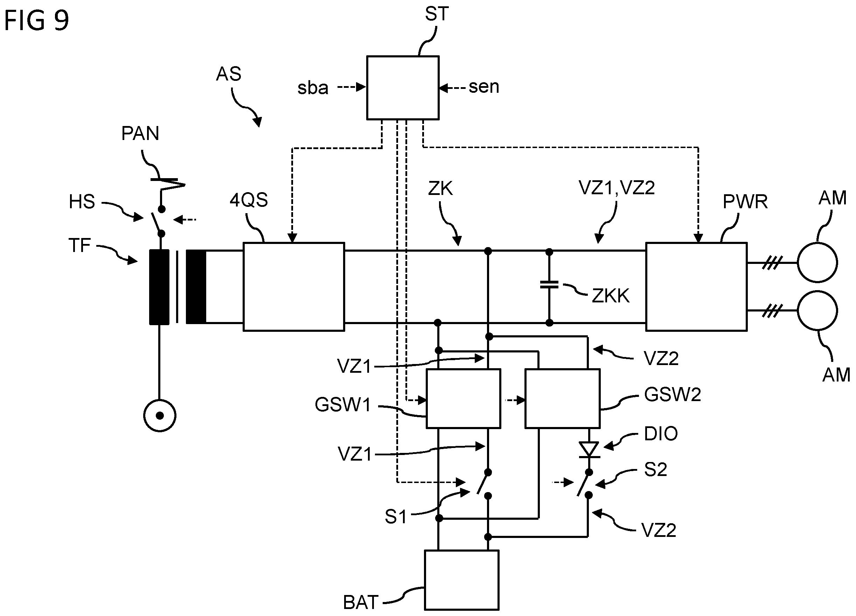

Die Steuereinrichtung ST kann in bestimmten Betriebssituationen des Energiespeichers BAT, welche nachfolgend bezüglich der FIG 9 erläutert werden, ergänzend den zweiten Schalter S2 derart ansteuern, dass dieser auch den zweiten Verbindungspfad VZ2 öffnet, wodurch der Energiespeicher BAT mittels der beiden Schalter S1, S2 vollständig von dem Gleichspannungswandler GSW bzw. dem Gleichspannungszwischenkreis ZK getrennt wird.

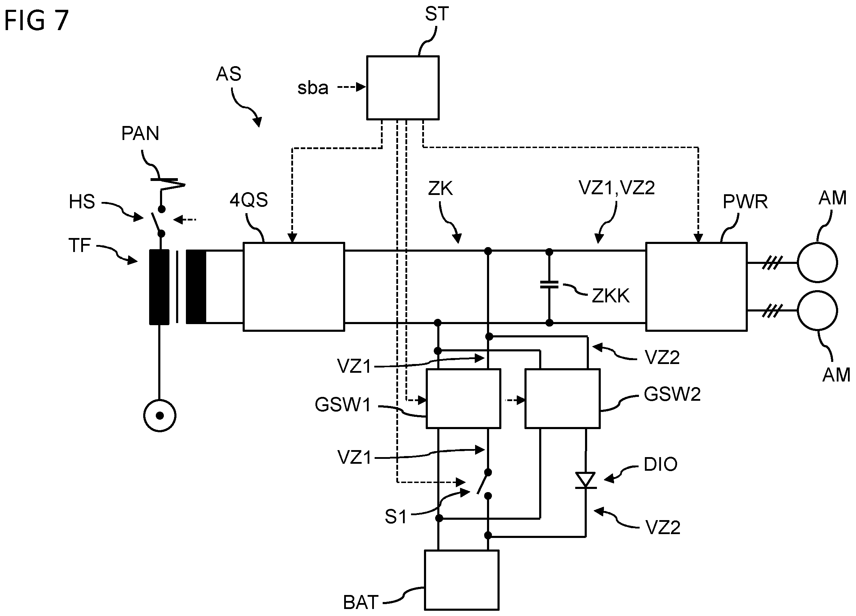

FIG 7 zeigt schematisch das Antriebssystem AS des Triebzugs TZ der FIG 1 in einer vierten erfindungsgemäßen Ausgestaltung. Neben einem dem Gleichspannungswandler GSW der Ausgestaltungen FIG 2 bis 6 entsprechenden steuerbaren bidirektionalen ersten Gleichspannungswandler GSW1 ist ein zu diesem elektrisch parallel geschalteter steuerbarer unidirektionaler zweiter Gleichspannungswandler GSW2 vorgesehen. Der zweite Gleichspannungswandler GSW2 ist dabei Teil des parallelen Verbindungsabschnitts des zweiten Verbindungspfads VZ2, wobei dieser Verbindungsabschnitt den Gleichspannungszwischenkreis ZK mit dem Energiespeicher BAT verbindet. Der erste Gleichspannungswandler GSW1 ist entsprechend Teil des parallelen Verbindungsabschnitts des ersten Verbindungspfads VZ1, wobei dieser Verbindungsabschnitt ebenfalls den Gleichspannungszwischenkreis ZK mit dem Energiespeicher BAT verbindet.

Der zweite Gleichspannungswandler GSW2 kann gegenüber dem ersten Gleichspannungswandler GSW1 schaltungstechnisch sowie bezüglich einer Steuerung von dessen Leistungshalbleiterschalter durch die Steuereinrichtung ST vorteilhaft einfacher ausgestaltet sein, da er ausschließlich einer Stromregelung sowie der Anpassung der Spannung UZK des Gleichspannungszwischenkreises ZK an die Spannung des Energiespeichers BAT dient.

Entsprechend der zweiten Ausgestaltung der FIG 3 und 4 ist ein steuerbarer erster Schalter S1 in dem Verbindungsabschnitt des ersten Verbindungpfads VZ1 zwischen dem ersten Gleichspannungswandler GSW1 und dem Energiespeicher BAT angeordnet, wobei der erste Schalter S1 wiederum beispielhaft als ein Schütz ausgestaltet ist. In dem Verbindungsabschnitt des zweiten Verbindungspfads VZ2 zwischen dem zweiten Gleichspannungswandler GSW2 und dem Energiespeicher BAT ist eine Diode DIO, welche einen Stromfluss von dem Energiespeicher BAT über den zweiten Gleichspannungswandler GSW2 in Richtung des Gleichspannungszwischenkreises ZK sperrt.

FIG 7 zeigt das Antriebssystem AS der vierten Ausgestaltung in einem Zustand, nachdem die Steuereinrichtung ST eine Schnellbremsanforderung sba von einer übergeordneten Steuereinrichtung des Triebzugs TZ, wiederum beispielsweise initiiert von einem Zugsicherungssystem oder einer den Triebzug TZ führenden Person, empfangen hat. Aufgrund der empfangenen Schnellbremsanforderung sba steuert die Steuereinrichtung ST den ersten Schalter S1 derart an, dass dieser den während des normalen Antriebs- und Bremsbetriebs geschlossenen ersten Verbindungspfad VZ1 öffnet. Der zweite Verbindungspfad VZ2 bleibt hingegen geschlossen, wodurch der Energiespeicher BAT auch während der Schnellbremsung aus dem Gleichspannungszwischenkreis ZK geladen werden kann. Vorzugsweise steuert die Steuereinrichtung ST ergänzend die Leistungshalbleiterschalter des ersten Gleichspannungswandlers GSW1 derart an, dass diese einen Stromfluss in Richtung des Energiespeichers BAT sperren.

Ergänzend wurde in FIG 7, wie vorstehend bereits zu FIG 4 und 6 erläutert, in Folge der empfangenen Schnellbremsanforderung sba beispielhaft ein Öffnen des Hauptschalters HS sowie ein Absenken des Stromabnehmers PAN von der Steuereinrichtung ST gesteuert, um ergänzend ein Rückspeisen von generatorisch erzeugter elektrischer Energie in das zuvor verbundene Versorgungsnetz zu verhindern.

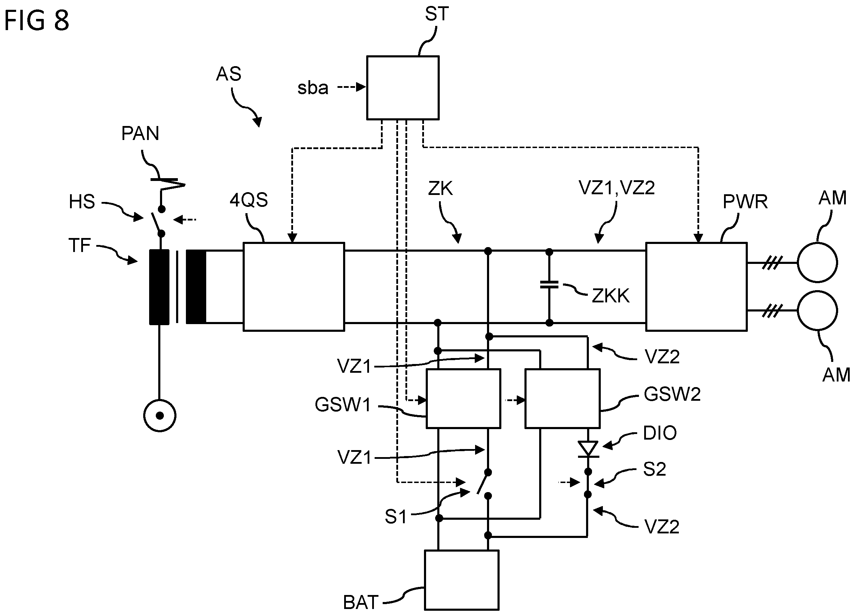

FIG 8 zeigt schematisch das Antriebssystem AS des Triebzugs TZ der FIG 1 in einer fünften erfindungsgemäßen Ausgestaltung. Gegenüber der vierten Ausgestaltung der FIG 7 ist in dem parallelen Verbindungsabschnitt des zweiten Verbindungspfads VZ2 ein steuerbarer zweiter Schalter S2 in Serie mit der Diode DIO geschaltet, wobei der erste Schalter S1 wiederum beispielhaft als ein Schütz ausgestaltet ist, welches unter Last sowie bevorzugt lastfrei bzw. stromlos von der Steuereinrichtung ST geschaltet werden kann.

Entsprechend dem dargestellten Zustand der vierten Ausgestaltung des Antriebssystems AS in FIG 7 zeigt FIG 8 auch das Antriebssystem AS der fünften Ausgestaltung in einem Zustand, nachdem die Steuereinrichtung ST eine Schnellbremsanforderung sba von einer übergeordneten Steuereinrichtung des Triebzugs TZ, wiederum beispielsweise initiiert von einem Zugsicherungssystem oder einer den Triebzug TZ führenden Person, empfangen hat. Aufgrund der empfangenen Schnellbremsanforderung sba steuert die Steuereinrichtung ST den ersten Schalter S1 wiederum derart an, dass dieser den während des normalen Antriebs- und Bremsbetriebs geschlossenen ersten Verbindungspfad VZ1 öffnet, während sie den zweiten Schalter S2 geschlossen hält, sodass der zweite Verbindungspfad VZ2 weiterhin geschlossen ist. Hierdurch ist der Energiespeicher BAT auch während der Schnellbremsung aus dem Gleichspannungszwischenkreis ZK über den zweiten Gleichspannungswandler GSW2 ladbar.

Ebenso entsprechend dem dargestellten Zustand der vierten Ausgestaltung in FIG 7 wurde auch in dem dargestellten Zustand der fünften Ausgestaltung des Antriebssystems AS in FIG 8 in Folge der empfangenen Schnellbremsanforderung sba beispielhaft ein Öffnen des Hauptschalters HS sowie ein Absenken des Stromabnehmers PAN von der Steuereinrichtung ST gesteuert, um einen Leistungszufluss von dem Versorgungsnetz und damit ein ungewolltes Antreiben zu verhindern.

FIG 9 zeigt das Antriebssystem AS der FIG 8 in der fünften Ausgestaltung ebenfalls in dem Zustand nach Empfang einer Schnellbremsanforderung sba. Ergänzend zeigt FIG 9 den Zustand, nachdem auch der zweite Schalter S2 derart von der Steuereinrichtung ST angesteuert wurde, dass dieser ergänzend auch den zweiten Verbindungspfad VZ2 öffnet. Vorzugsweise steuert die Steuereinrichtung ST ergänzend die Leistungshalbleiterschalter des zweiten Gleichspannungswandlers GSW2 derart an, dass diese einen Stromfluss in Richtung des Energiespeichers BAT sperren. Nach Öffnen des zweiten Schalters S2 ist der Energiespeicher BAT vollständig von den ersten und zweiten Gleichspannungswandlern GSW1, GSW2 und damit von dem Gleichspannungszwischenkreis ZK getrennt, sodass der Energiespeicher BAT in Folge weder geladen noch entladen werden kann.

Ein Öffnen auch des zweiten Schalters S2 und damit des zweiten Verbindungspfads VZ2 während einer Schnellbremsung und insbesondere zeitlich nach dem Öffnen des ersten Schalters S1 kann beispielsweise erforderlich sein, um den Energiespeicher BAT zu schützen. Diese Schutzreaktion erfolgt beispielsweise, wenn, wie in FIG 9 dargestellt, die Steuereinrichtung ST anhand von empfangenen Sensordaten sen von Betriebsparametern einen Betriebszustand des Energiespeichers BAT bestimmt, nach welchem dieser nicht weiter geladen werden kann bzw. sollte. Beispielsweise umfassen die aus mittels geeigneter Sensoren erfassten Betriebsparameter eine Temperatur des Energiespeichers BAT bzw. von einzelnen Batteriezellen, Batteriemodulen des Energiespeichers BAT oder eines diesen kühlenden Kühlmittels, und/oder einen Ladezustand, welcher beispielsweise anhand einer Spannung einzelner bzw. aller Batteriezellen oder Batteriemodule von der Steuereinrichtung ST bestimmt wird. Die Bestimmung des Zustands des Energiespeichers BAT erfolgt beispielsweise mittels eines Vergleichs der bestimmten Betriebsparameter mit vorgegebenen Schwellwerten.

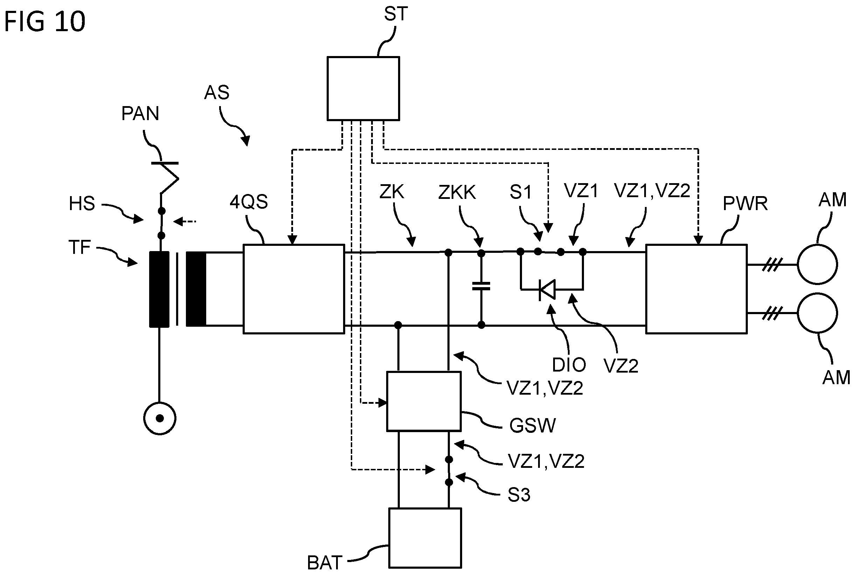

FIG 10 zeigt schematisch das Antriebssystem AS des Triebzugs TZ der FIG 1 in einer sechsten erfindungsgemäßen Ausgestaltung. Nach dieser Ausgestaltung ist ein steuerbarer erster Schalter S1 in einem Verbindungsabschnitt des oberen Potenzialzweigs des Gleichspannungszwischenkreises ZK angeordnet, während in einem zu diesem Verbindungsabschnitt elektrisch parallel geschalteten Verbindungsabschnitt des zweiten Verbindungspfads VZ2 eine Diode DIO angeordnet ist.

Ferner ist in dem Verbindungsabschnitt der Verbindungspfade VZ1, VZ2 zwischen dem Gleichspannungswandler GSW und dem Energiespeicher BAT ein steuerbarer dritter Schalter S3 angeordnet. Entsprechend der vorstehenden Beschreibung zu FIG 9 kann während einer Schnellbremsung, als eine Schutzreaktion, der dritte Schalter S3 von der Steuereinrichtung ST situativ geöffnet werden, wenn diese auf Basis von Sensordaten sen von Betriebsparametern des Energiespeichers BAT bestimmt, dass der Energiespeicher BAT keine weitere elektrische Energie aufnehmen kann bzw. sollte. In diesem Fall kann, wenn das Antriebssystem AS über den Stromabnehmer PAN weiterhin mit dem Versorgungsnetz verbunden ist und dieses aufnahmefähig ist, während des Bremsbetriebs generierte elektrische Energie in das Versorgungsnetz gespeist werden und/oder über in FIG 10 nicht dargestellte Bremswiderstände in Wärme gewandelt werden.

FIG 10 zeigt die Schaltstellung des ersten Schalters S1 während eines normalen Antriebs- und Bremsbetriebs des Antriebssystems AS. In dieser Betriebsphase ist, von der Steuereinrichtung ST gesteuert, der erste Schalter S1 und damit der erste Verbindungspfad VZ1 ebenso wie der zweite Verbindungspfad VZ2 geschlossen, sodass während des Bremsbetriebs ein Teil des von der elektrodynamischen Bremse generierten Stroms über die Diode DIO bzw. den zweiten Verbindungspfad VZ2 fließen kann.

Ergänzend kann in dem parallelen Verbindungsabschnitt des zweiten Verbindungspfads VZ2 ein in FIG 10 nicht dargestellter steuerbarer zweiter Schalter vorgesehen sein, welcher in Serie mit der Diode DIO geschaltet ist. Ein Öffnen des zweiten Verbindungspfad VZ2 mittels eines solchen zweiten Schalters kann beispielsweise sinnvoll sein, um einen Stromfluss über die Diode DIO während des normalen Bremsbetriebs zu vermeiden, beispielsweise wenn die Diode DIO fehlerhaft oder defekt ist.

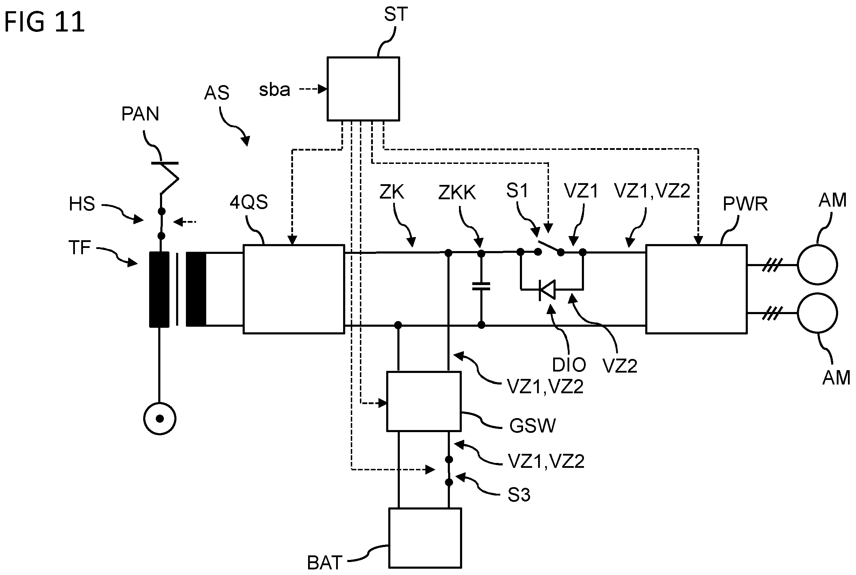

FIG 11 zeigt das Antriebssystem AS der sechsten Ausgestaltung der FIG 10 in einem Zustand, nachdem die Steuereinrichtung ST eine Schnellbremsanforderung sba von einer übergeordneten Steuereinrichtung des Triebzugs TZ, wiederum beispielsweise initiiert von einem Zugsicherungssystem oder einer den Triebzug TZ führenden Person, empfangen hat. Aufgrund der empfangenen Schnellbremsanforderung sba steuert die Steuereinrichtung ST den ersten Schalter S1 derart an, dass dieser den während des normalen Antriebs- und Bremsbetriebs geschlossenen ersten Verbindungspfad VZ1 öffnet. Diese Schalterstellung bewirken wiederum, dass während der Schnellbremsung ein von der elektrodynamischen Bremse generierter Strom über den zweiten Verbindungszweig VZ2 in Richtung des Energiespeichers BAT fließen kann, sodass auch während der Schnellbremsung die regenerative Bremse des Triebzugs TZ zum Laden des Energiespeichers BAT genutzt werden kann. Ein Stromfluss von dem Energiespeicher BAT in Richtung des Wechselrichters PWR wird hingegen durch die sperrende Diode DIO in dem zweiten Verbindungspfad VZ2 verhindert, sodass ein ungewolltes bzw. nicht zulässiges Antreiben unterbunden wird.

Neben einem Stromfluss in Richtung des Energiespeichers BAT kann während der Schnellbremsung ebenso Strom über den Gleichrichter 4QS in Richtung des Versorgungsnetzes fließen, sofern das Antriebssystem AS mit einem solchen verbunden ist und dieses aufnahmefähig ist, also generierte elektrische Energie verlässlich aufnehmen kann. Die Steuereinrichtung ST steuert entsprechend den Gleichrichter 4QS und den Gleichspannungswandler GW derart an, dass der generierte Strom in den Energiespeicher BAT und/oder in das Versorgungsnetz fließt, insbesondere abhängig von der jeweiligen Aufnahmefähigkeit.

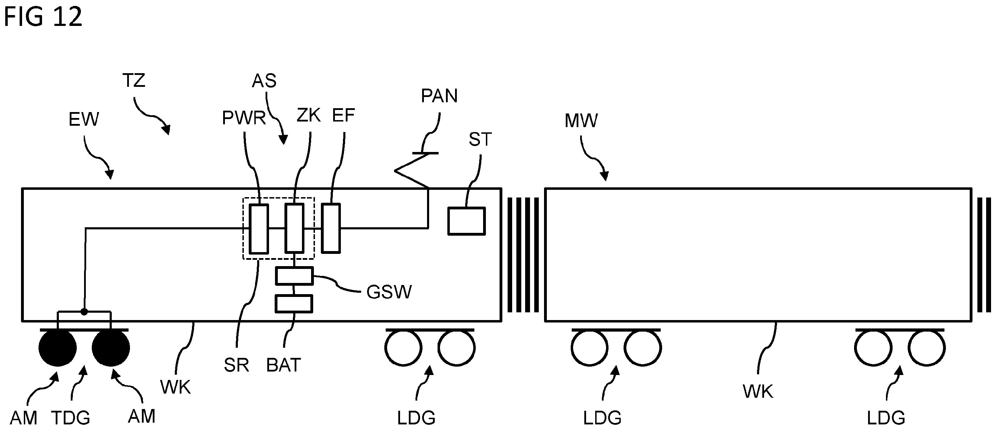

FIG 12 zeigt schematisch ein Schienenfahrzeug, welches beispielhaft entsprechend dem der FIG 1 als ein Triebzug TZ für die Personenbeförderung ausgestaltet ist. Im Unterschied zu dem Antriebssystem AS des Triebzugs TZ der FIG 1 ist in dem alternativen Antriebssystem AS des Triebzugs TZ der FIG 12 der Gleichspannungszwischenkreis ZK des Stromrichters SR über einen Eingangsfilter EF und den Stromabnehmer PAN mit einer wiederum nicht dargestellten Oberleitung eines streckenseitigen Versorgungsnetzes verbindbar, um das Antriebssystem AS mit einem Gleichstrom mit einer Spannung von beispielsweise 750 V, 1.500 V oder 3.000 V zu versorgen. Alternativ zu einer Oberleitung kann das Versorgungsnetz beispielsweise eine im Gleis oder seitlich des Gleises geführte Stromschiene, auch als dritte Schienen bezeichnet, umfassen. In letzterem Fall ist der Stromabnehmer PAN beispielsweise als ein Seitenstromabnehmer ausgestaltet.

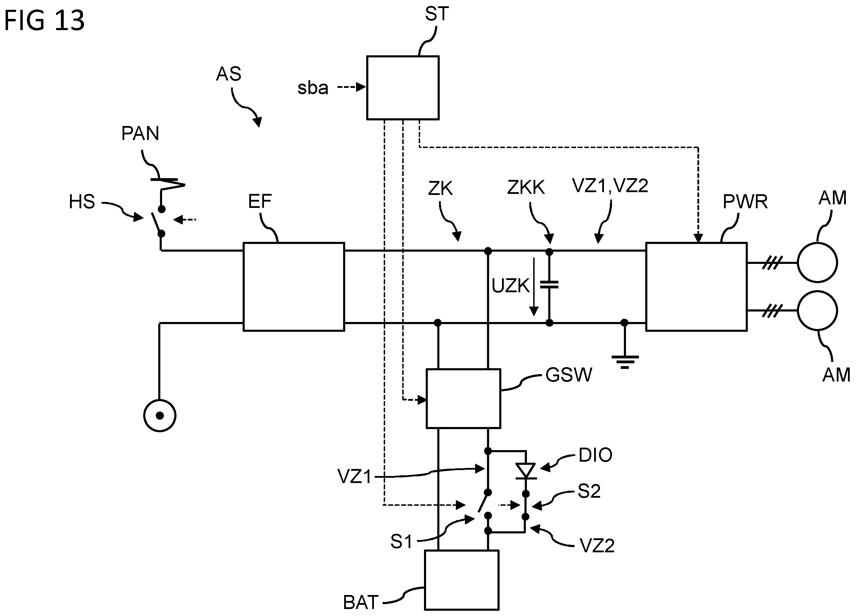

FIG 13 zeigt schematisch das alternative Antriebssystem AS des Triebzugs TZ der FIG 12 in einer erfindungsgemäßen Ausgestaltung, welche bezüglich des ersten VZ1 und zweiten Verbindungspfads VZ2 beispielhaft der dritten Ausgestaltung nach den FIG 5 und 6 entspricht. Im Unterschied zu den vorstehend beschriebenen Ausgestaltungen ist der untere Potenzialzweig des Gleichspannungszwischenkreises ZK mit dem Massepotenzial des Triebzugs TZ verbunden, und ist der untere Potenzialzweig des Eingangsfilters EF beispielhaft über einen Rad-Schiene-Kontakt mit dem Erdpotenzial verbunden.

Entsprechend der dritten Ausgestaltung in dem Status der FIG 6 wurde nach Empfang einer Schnellbremsanforderung sba durch die Steuereinrichtung ST der erste Schalter S1 derart angesteuert, dass dieser den ersten Verbindungspfad VZ1 öffnet, und der zweite Schalter S2 derart angesteuert, dass dieser den zweiten Verbindungspfad VZ2 mit der darin angeordneten Diode DIO schließt bzw. geschlossen hält. Dies verhindert wiederum, dass während der durch die Schnellbremsanforderung sba aktivierten Schnellbremsung elektrische Energie von dem Energiespeicher BAT in Richtung des Gleichspannungszwischenkreises ZK und Wechselrichters PWR fließen kann, welche zu einem ungewollten bzw. nicht zulässigen Antreiben führen könnte. Ferner wurde der Hauptschalter HS geöffnet sowie der Stromabnehmer PAN gesenkt bzw. das Antriebssystem AS von dem Versorgungsnetz getrennt, um ein ungewolltes bzw. nicht zulässiges Antreiben zu verhindern.

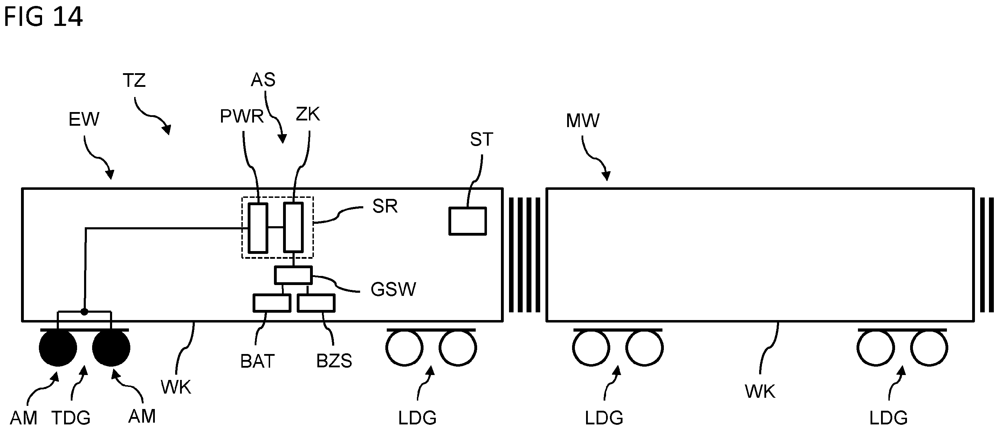

FIG 14 zeigt schematisch ein Schienenfahrzeug, welches beispielhaft ebenfalls entsprechend dem der FIG 1 als ein Triebzug TZ für die Personenbeförderung ausgestaltet ist. Im Unterschied zu dem Antriebssystem AS des Triebzugs TZ der FIG 1 ist in dem weiteren alternativen Antriebssystem AS des Triebzugs TZ der FIG 14 der Gleichspannungszwischenkreis ZK des Stromrichters SR ausschließlich mit dem Gleichspannungswandler GSW verbunden. Das weitere alternative Antriebssystem AS ist somit nicht mit einem fahrzeugexternen Versorgungsnetz zur Bereitstellung elektrischer Energie verbindbar. Vielmehr wird die für den Betrieb des Antriebssystems AS erforderliche elektrische Energie von zumindest einem Brennstoffzellensystem BZS bereitgestellt, welches beispielhaft elektrisch parallel zu dem Energiespeicher BAT geschaltet ist und über den Gleichspannungswandler GSW mit dem Gleichspannungszwischenkreis ZK verbunden ist. Das zumindest eine Brennstoffzellensystem BZS umfasst dabei in bzw. an einem oder mehreren Wagen des Triebzugs TZ angeordnete Komponenten, welche zumindest einen Brennstoffzellenstapel, zumindest einen Brennstofftank, insbesondere zur Speicherung von Wasserstoff, sowie für den Betrieb des Systems erforderliche Hilfsbetriebe wie Kompressoren, Lüfter, Befeuchter sowie Kühlkreisläufe umfassen.

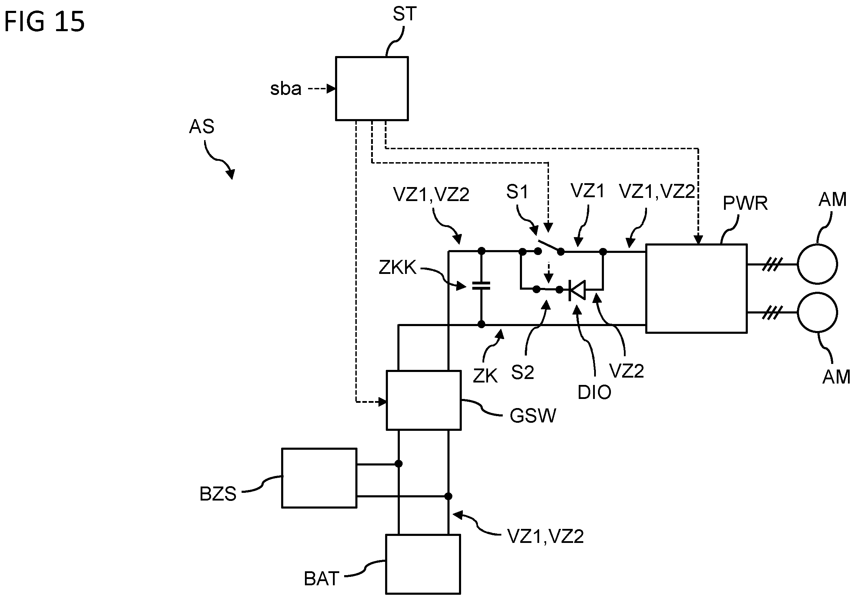

FIG 15 zeigt schematisch das weitere alternative Antriebssystem AS des Triebzugs TZ der FIG 14 in einer erfindungsgemäßen Ausgestaltung, welche bezüglich des ersten VZ1 und zweiten Verbindungspfads VZ2 beispielhaft der sechsten Ausgestaltung nach FIG 10 und 11 entspricht.

Entsprechend der sechsten Ausgestaltung in dem Status der FIG 11 ist die Situation dargestellt, dass von der Steuereinrichtung ST eine Schnellbremsanforderung sba empfangen wurde. In Reaktion auf den Empfang dieser Schnellbremsanforderung sba wird von der Steuereinrichtung ST der zuvor während des normalen Antriebs- und Bremsbetriebs des Antriebssystems AS geschlossene erste Schalter S1 geöffnet, und wird der zweite Schalter S2 geschlossen bzw. bleibt geschlossen. Dies bewirkt wiederum, dass während der Schnellbremsung ein von der elektrodynamischen Bremse generierter Strom in Richtung des Energiespeichers BAT fließen kann, sodass auch während der Schnellbremsung die regenerative Bremse des Triebzugs TZ zum Laden des Energiespeichers BAT nutzbar ist. Ein Stromfluss von dem Energiespeicher BAT oder dem Brennstoffzellensystem BZS über den Gleichspannungszwischenkreis ZK in Richtung des Wechselrichters PWR wird hingegen mittels der sperrenden Diode DIO in dem geschlossenen zweiten Verbindungspfad VZ2 verhindert, sodass ein ungewolltes Antreiben nicht auftreten kann.

Ein Öffnen auch des zweiten Schalters S2 während einer Schnellbremsung kann beispielsweise erforderlich sein, wenn, wie zu FIG 9 erläutert, die Steuereinrichtung ST anhand von empfangenen Sensordaten sen von Betriebsparametern des Energiespeichers BAT und einem Vergleich mit vorgegebenen Schwellwerten bestimmt, dass der Energiespeicher BAT nicht weiter geladen werden kann bzw. sollte. Beispielsweise umfassen die bestimmten Betriebsparameter eine Temperatur des Energiespeichers BAT bzw. von einzelnen Batteriezellen, Batteriemodulen des Energiespeichers BAT oder eines diesen kühlenden Kühlmittels, und/oder einen Ladezustand, welcher beispielsweise anhand aller Zellspannungen des Energiespeichers BAT von der Steuereinrichtung ST bestimmt wird.

Ergänzend zu den in den Figuren dargestellten und vorstehend beschriebenen Ausgestaltungen sind weitere Ausgestaltungen denkbar, welche Elemente der verschiedenen Ausgestaltungen kombinieren.

### Bezugszeichenliste

- 4QS: Gleichrichter/Vierquadrantensteller
- AM: Antriebsmotor
- AS: Antriebssystem
- BAT: Energiespeicher
- BZS: Brennstoffzellensystem
- DIO: Diode
- EF: Eingangsfilter
- EW: Endwagen
- GSW, GSW1, GSW2: Gleichspannungswandler
- HS: Hauptschalter
- LDG: Laufdrehgestell
- MW: Mittelwagen
- PAN: Stromabnehmer
- PWR: Wechselrichter/Pulswechselrichter
- S, S1, S2: Schalter
- sba: Schnellbremsanforderung
- sen: Sensordaten
- SR: Stromrichter
- ST: Steuereinrichtung
- TDG: Triebdrehgestell
- TF: Transformator
- TZ: Schienenfahrzeug, Triebzug
- UZK: Spannung Gleichspannungszwischenkreis
- VZ1, VZ2: Verbindungspfad
- WK: Wagenkasten
- ZK: Gleichspannungszwischenkreis
- ZKK: Zwischenkreiskondensator

## Patentansprüche

1. Elektrisches Antriebssystem (AS) für ein Schienenfahrzeug (TZ), umfassend
- einen Stromrichter (SR), welcher zumindest einen Gleichspannungszwischenkreis (ZK) und zumindest einen mit diesem verbundenen steuerbaren Wechselrichter (PWR) aufweist,
- eine Anzahl Antriebsmotoren (AM), welche mit dem Wechselrichter (PWR) verbunden sind,
- zumindest einen Energiespeicher (BAT) zur Speicherung elektrischer Energie,
- einen mit dem Gleichspannungszwischenkreis (ZK) und dem Energiespeicher (BAT) verbundenen steuerbaren bidirektionalen ersten Gleichspannungswandler (GSW, GSW1),
- einen ersten Verbindungspfad (VZ1), über welchen der Energiespeicher (BAT) mit dem Wechselrichter (PWR) verbunden ist, und
- eine Steuereinrichtung (ST), welche ausgestaltet ist, während eines Betriebs des Antriebssystems (AS) den ersten Gleichspannungswandler (GSW, GSW1) derart zu steuern, dass der Energiespeicher (BAT) aus dem Gleichspannungszwischenkreis (ZK) geladen wird und in den Gleichspannungszwischenkreis (ZK) entladen wird,
**dadurch gekennzeichnet, dass**
das Antriebssystem (AS) ergänzend umfasst:
- einen zweiten Verbindungspfad (VZ2), über welchen der Energiespeicher (BAT) mit dem Wechselrichter (PWR) verbunden ist, und welcher abschnittsweise parallel zu dem ersten Verbindungspfad (VZ1) geschaltet ist,
- zumindest eine in dem parallelen Abschnitt des zweiten Verbindungspfads (VZ2) angeordnete Diode (DIO), welche ausgestaltet ist, ein Speisen des Wechselrichters (PWR) mit in dem Energiespeicher (BAT) gespeicherter elektrischer Energie zu verhindern,
- zumindest einen steuerbaren ersten Schalter (S, S1), welcher ausgestaltet ist, den ersten Verbindungspfad (VZ1) zu öffnen und zu schließen, und
- die Steuereinrichtung (ST) ergänzend ausgestaltet ist, bei Anforderung einer Schnellbremsung (sba) während eines Antriebs- oder Bremsbetriebs des Antriebssystems (AS) den ersten Verbindungspfad (VZ1) mittels des zumindest einen ersten Schalters (S, S1) zu öffnen, sodass der Energiespeicher (BAT) während der Schnellbremsung ausschließlich über den zweiten Verbindungspfad (VZ2) mit von der Anzahl Antriebsmotoren (AM) und dem Wechselrichter (PWR) elektrodynamisch generierter Energie ladbar ist.

2. Antriebssystem (AS) nach Anspruch 1, **dadurch gekennzeichnet, dass** der erste Schalter (S) ergänzend ausgestaltet ist, den zweiten Verbindungspfad (VZ2) zu öffnen und zu schließen.

3. Antriebssystem (AS) nach Anspruch 1, **dadurch gekennzeichnet, dass** es ergänzend zumindest einen steuerbaren zweiten Schalter (S2) umfasst, welcher ausgestaltet ist, den zweiten Verbindungspfad (VZ2) zu öffnen und zu schließen.

4. Antriebssystem (AS) nach Anspruch 3, **dadurch gekennzeichnet, dass** die Steuereinrichtung (ST) ergänzend ausgestaltet ist, bei Anforderung der Schnellbremsung (sba) den zuvor geöffneten zweiten Verbindungspfad (VZ2) mittels des zumindest einen zweiten Schalters (S2) zu schließen oder den bereits geschlossenen zweiten Verbindungspfad (VZ2) geschlossen zu halten.

5. Antriebssystem (AS) nach einem der Ansprüche 1 bis 4, **dadurch gekennzeichnet, dass** der parallele Abschnitt des zweiten Verbindungspfads (VZ2) zwischen dem ersten Gleichspannungswandler (GSW) und dem Energiespeicher (BAT) angeordnet ist.

6. Antriebssystem (AS) nach einem der Ansprüche 1 bis 4, **dadurch gekennzeichnet, dass**
- es ergänzend einen parallel zu dem ersten Gleichspannungswandler (GSW1) geschalteten steuerbaren unidirektionalen zweiten Gleichspannungswandler (GSW2) umfasst, wobei der erste Gleichspannungswandler (GSW1) in dem ersten Verbindungspfad (VZ1) und der zweite Gleichspannungswandler (GSW2) in dem zweiten Verbindungspfad (VZ2) angeordnet sind, und
- die Steuereinrichtung (ST) ergänzend ausgestaltet ist, den zweiten Gleichspannungswandler (GSW2) derart zu steuern, dass der Energiespeicher (BAT) insbesondere während der Schnellbremsung über den zweiten Verbindungspfad (VZ2) geladen wird.

7. Antriebssystem (AS) nach einem der Ansprüche 1 bis 4, **dadurch gekennzeichnet, dass** der parallele Abschnitt des zweiten Verbindungspfads (VZ2) zwischen dem Wechselrichter (PWR) und dem ersten Gleichspannungswandler (GSW) angeordnet ist.

8. Antriebssystem (AS) nach Anspruch 3 oder 4, **dadurch gekennzeichnet, dass** in dem parallelen Abschnitt des ersten Verbindungspfads (VZ1) der erste Schalter (S1) und in dem parallelen Abschnitt des zweiten Verbindungspfads (VZ2) der zweite Schalter (S2) angeordnet sind, wobei der zweite Schalter (S2) in Serie zu der Diode (DIO) geschaltet ist.

9. Antriebssystem (AS) nach einem der vorstehenden Ansprüche, **dadurch gekennzeichnet,**
**dass**
die Steuereinrichtung (ST) ergänzend ausgestaltet ist, während der Schnellbremsung erfasste Betriebsparameter des Energiespeichers (BAT) auszuwerten und abhängig von einem Ergebnis der Auswertung ergänzend den geschlossenen zweiten Verbindungspfad (VZ2) zu öffnen.

10. Antriebssystem (AS) nach einem der vorstehenden Ansprüche, **dadurch gekennzeichnet,**
**dass**
es ergänzend alternativ oder in Kombination:
- zumindest einen steuerbaren Gleichrichter (4QS), einen Transformator (TF) und einen Stromabnehmer (PAN) umfasst, über welche der Gleichspannungszwischenkreis (ZK) mit einem einen Einphasen-Wechselstrom führendem fahrzeugexternen Versorgungsnetz verbindbar ist,
- einen Stromabnehmer (PAN) und insbesondere ein Eingangsfilter (EF) umfasst, über welche der Gleichspannungszwischenkreis (ZK) mit einem einen Gleichstrom führenden externen Versorgungsnetz verbindbar ist,
- zumindest ein Brennstoffzellensystem (BZS) umfasst, mit welchem der Gleichspannungszwischenkreis (ZK) insbesondere über den ersten Gleichspannungswandler (GSW) verbunden ist.

11. Schienenfahrzeug (TZ), umfassend
zumindest ein Antriebssystem (AS) nach einem der Ansprüche 1 bis 10.

12. Verfahren zum Steuern eines elektrischen Antriebssystems (AS) eines Schienenfahrzeugs (TZ),
wobei das Antriebssystem (AS) umfasst:
- einen Stromrichter (SR), welcher zumindest einen Gleichspannungszwischenkreis (ZK) und zumindest einen mit diesem verbundenen steuerbaren Wechselrichter (PWR) aufweist,
- eine Anzahl Antriebsmotoren (AM), welche mit dem Wechselrichter (PWR) verbunden sind,
- zumindest einen Energiespeicher (BAT) zur Speicherung elektrischer Energie,
- einen mit dem Gleichspannungszwischenkreis (ZK) und dem Energiespeicher (BAT) verbundenen steuerbaren bidirektionalen ersten Gleichspannungswandler (GSW, GSW1),
- einen ersten Verbindungspfad (VZ1), über welchen der Energiespeicher (BAT) mit dem Wechselrichter (PWR) verbunden ist, und
- eine Steuereinrichtung (ST),
wobei während eines Betriebs des Antriebssystems (AS) der erste Gleichspannungswandler (GSW, GSW1) von der Steuereinrichtung (ST) derart gesteuert wird, dass der Energiespeicher (BAT) aus dem Gleichspannungszwischenkreis (ZK) geladen wird und in den Gleichspannungszwischenkreis (ZK) entladen wird,
**dadurch gekennzeichnet, dass**
das Antriebssystem (AS) ergänzend umfasst:
- einen zweiten Verbindungspfad (VZ2), über welchen der Energiespeicher (BAT) mit dem Wechselrichter (PWR) verbunden ist, und welcher abschnittsweise parallel zu dem ersten Verbindungspfad (VZ1) geschaltet ist,
- zumindest eine in dem parallelen Abschnitt des zweiten Verbindungspfads (VZ2) angeordnete Diode (DIO), welche ausgestaltet ist, ein Speisen des Wechselrichters (PWR) mit in dem Energiespeicher (BAT) gespeicherter elektrischer Energie zu verhindern,
- zumindest einen steuerbaren ersten Schalter (S, S1), welcher ausgestaltet ist, den ersten Verbindungspfad (VZ1) zu öffnen und zu schließen, und
wobei bei Anforderung einer Schnellbremsung (sba) während eines Antriebs- oder Bremsbetriebs des Antriebssystems (AS) von der Steuereinrichtung (ST) der erste Verbindungspfad (VZ1) mittels des zumindest einen ersten Schalters (S, S1) geöffnet wird, um den Energiespeicher (BAT) während der Schnellbremsung ausschließlich über den zweiten Verbindungspfad (VZ2) mit von der Anzahl Antriebsmotoren (AM) und dem Wechselrichter (PWR) elektrodynamisch generierter Energie zu laden.

13. Verfahren nach Anspruch 12, **dadurch gekennzeichnet, dass**
das Antriebssystem (AS) ergänzend einen parallel zu dem ersten Gleichspannungswandler (GSW1) geschalteten steuerbaren unidirektionalen zweiten Gleichspannungswandler (GSW2) umfasst, wobei der erste Gleichspannungswandler (GSW1) in dem ersten Verbindungspfad (VZ1) und der zweite Gleichspannungswandler (GSW2) in dem zweiten Verbindungspfad (VZ2) angeordnet sind, und
der zweite Gleichspannungswandler (GSW2) von der Steuereinrichtung (ST) insbesondere während der Schnellbremsung derart gesteuert wird, dass der Energiespeicher (BAT) über den zweiten Verbindungspfad (VZ2) ladbar ist.

14. Verfahren nach Anspruch 12 oder 13, **dadurch gekennzeichnet, dass**
während der Schnellbremsung erfasste Betriebsparameter des Energiespeichers (BAT) von der Steuereinrichtung (ST) ausgewertet werden, und abhängig von einem Ergebnis der Auswertung der zweite Verbindungspfad (VZ2) von der Steuereinrichtung (ST), insbesondere als eine Schutzreaktion, geöffnet wird.
